(19) Europäisches Patentamt
European Patent Office
Office européen des brevets

(11) EP 0 864 586 B1

(12) FASCICULE DE BREVET EUROPEEN

(45) Date de publication et mention de la délivrance du brevet:
**03.04.2002 Bulletin 2002/14**

(51) Int Cl.[7]: **C07B 57/00**, C08B 37/00, C08B 15/06

(21) Numéro de dépôt: **98400501.7**

(22) Date de dépôt: **03.03.1998**

# (54) Supports chiraux et leur utilisation dans la préparation ou séparation d'énantiomères

Chirale Träger und deren Verwendung in der Hertsellung oder Trennung von Enantiomeren

Chiral supports and use thereof in the preparation or separation of enantiomers

(84) Etats contractants désignés:
**AT BE CH DE DK ES FR GB IE IT LI NL SE**

(30) Priorité: **14.03.1997 FR 9703076**

(43) Date de publication de la demande:
**16.09.1998 Bulletin 1998/38**

(73) Titulaires:
- **INSTITUT FRANCAIS DU PETROLE 92500 Rueil Malmaison (FR)**
- **Chiralsep Sàrl 76170 La Frenaye (FR)**

(72) Inventeurs:
- **Duval, Raphael 76330 Notre Dame De Gravenchon (FR)**
- **Leveque, Hubert 76170 Lillebonne (FR)**

(74) Mandataire: **Andréeff, François
Département Brevets,
Institut Français du Petrole,
1 & 4 avenue de Bois-Préau
92852 Rueil Malmaison (FR)**

(56) Documents cités:
**FR-A- 2 394 523**

- **PATENT ABSTRACTS OF JAPAN vol. 18, no. 46 (C-1157), 25 janvier 1994 & JP 05 271307 A (TOPPAN PRINTING CO LTD), 19 octobre 1993 & DATABASE WPI Week 9346 Derwent Publications Ltd., London, GB; AN 365255**
- **GUOLIANG YI ET AL.: "Large-rim tethered permethyl-substituted beta-cyclodextrin polysiloxanes for use as chiral stationary phases in open tubular column chromatography." JOURNAL OF CHROMATOGRAPHY A, vol. 673, 1994, pages 219-230, XP002048165**
- **PATENT ABSTRACTS OF JAPAN vol. 95, no. 2, 31 mars 1995 & JP 06 329561 A (DAICEL CHEM IND LTD), 29 novembre 1994 & DATABASE WPI Week 9507 Derwent Publications Ltd., London, GB; AN 48770**
- **PATENT ABSTRACTS OF JAPAN vol. 97, no. 2, 28 février 1997 & JP 08 259470 A (NAKARAI TESUKU), 8 octobre 1996 & DATABASE WPI Week 9650 Derwent Publications Ltd., London, GB; AN 502647**

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 864 586 B1

Printed by Jouve, 75001 PARIS (FR)

## Description

L'invention concerne des supports comportant des composés chiraux, habituellement sous forme de réseau chiral tridimensionnel réticulé et possédant généralement un taux de réticulation modulable en fonction du taux de gonflement souhaité, ainsi que l'utilisation desdits supports en séparation et en préparation d'énantiomères, principalement en chromatographie analytique ou préparative et en synthèse asymétrique.

La séparation d'énantiomères est un domaine en expansion depuis une vingtaine d'années, tant au niveau préparatif qu'au niveau analytique. Ceci est vrai en particulier pour l'utilisation en pharmacie, où la législation impose l'étude séparée des isomères optiques de tout composé chiral entrant dans la composition d'un médicament. Les polysaccharides substitués ont fait l'objet de nombreuses études, et des celluloses déposées physiquement sur support de gel de silice sont commercialisées. De tels composés présentent cependant le désavantage d'être le plus souvent solubles dans les solvants polaires organiques, ce qui limite singulièrement leur utilisation.

Des solutions récentes ont été apportées au problème de la solubilisation, par l'établissement de liaisons covalentes entre le polysaccharide substitué et le support. Kimata et al. ont exposé leurs résultats (Analytical Methods and Instrumentation, vol. 1, 23-29 (1993)) sur une phase stationnaire chirale à base de Cellulose-tris 2,3,6(4-vinyl benzoate) déposée sur gel de silice, puis polymérisée sur le support.

Les données chromatographiques obtenues avec deux mélanges racémiques tests sont les suivantes :

| | Support déposé | | Support déposé et polymérisé | |
|---|---|---|---|---|
| | Oxyde de stilbène | 1-(1-naphtyl éthanol) | Oxyde de stilbène | 1-(1-naphtyl éthanol) |
| k'1 | 1,08 | 2,15 | 1,04 | 1,47 |
| k'2 | 1,66 | 2,84 | 1,44 | 1,80 |
| $\alpha$ | 1,54 | 1,32 | 1,39 | 1,22 |
| $R_S$ | 3,63 | 2,34 | 3,82 | 1,44 |

où

- k'1 et k'2 sont les facteurs de capacité, c'est-à-dire qui, si i = 1 ou 2, $k'_i = \frac{t_{Ri} - t_o}{t_o}$ où $t_{Ri}$ est le temps de rétention du composé i et $t_O$ est le temps mort.
- $\alpha$ est le facteur de sélectivité :

$$\alpha = \frac{t_{R2} - t_o}{t_{R1} - t_o} = \frac{k'2}{k'1}$$

- $R_s$ est le facteur de résolution :

$$R_S = \frac{1}{4}\left(\frac{\alpha - 1}{\alpha}\right)\left(\frac{k'2}{1 + k'2}\right)(N)^{1/2}$$

où N est le nombre de plateaux

$$N = a \; \frac{t_R}{\omega}^2,$$

avec $\omega$ largeur de pic à une ordonnée donnée, reliée au carré de l'écart type ou variance $\sigma^2$ par relation $\omega^2 = a\sigma^2$ soit

$$N = 16\left(\frac{t_R}{\omega}\right)^2 = 5,54\left(\frac{t_R}{\delta}\right)^2$$

On peut observer, entre le support déposé et le support déposé et polymérisé, une baisse systématique des facteurs de sélectivité obtenus : moins 10 % sur le trans-stilbène oxyde ($\alpha$ varie de 1,54 à 1,39) et moins 25 % pour le 1-(1-naphtyl)éthanol.

Ce phénomène pourrait s'expliquer par une solubilité partielle du support polymérisé du fait d'une polymérisation incomplète due à une réactivité faible du groupement vinyl benzoate dans des conditions réactionnelles mises en oeuvre.

D'autre part, Kimata et al. ne présentent aucun exemple de séparation dans un solvant polaire pur.

Okamoto et al. ont décrit (EP-B-0 155 637) les polymères liés chimiquement à du gel de silice. Ils décrivent en particulier le greffage de cellulose tris 2,3,6-phénylcarbamate sur du gel de silice via un intermédiaire tritylé, puis la réalisation de la liaison covalente, entre le gel de silice et le carbamate de polysaccharide partiellement dérivé, par l'action d'un diisocyanate.

Les résutlats des analyses élémentaires effectuées lors des différentes étapes de synthèse sont les suivants (EP-B- 0 155 637, page 8 à page 9, ligne 33).

| | | C % | H % | N % |
|---|---|---|---|---|
| 1. | Trityl cellulose déposée sur silice | 15,40 | 1,23 | 0,09 |
| 2. | Cellulose détritylée déposée sur silice | 3,61 | 0,60 | _ |
| 3. | Cellulose liée à la silice par toluène 2,4 diisocyanate | _ | _ | _ |
| 4. | Cellulose phényl carbamate liée à la silice et lavée THF/chloroforme | 3,23 | 0,27 | 0,45 |

La perte en taux de greffage entre la cellulose déposée sur silice (2) et le phénylcarbamate de cellulose lié à la silice (4) est importante sachant que le taux de (4) calculé d'après (2) est de l'ordre de 14 % en carbone. On peut donc estimer la perte en motifs hydrocarbonés à 80 % depuis la réalisation de la liaison covalente, entre le cellulose et la silice, par le bras diisocyanate, suivie de la dérivation des OH avec l'isocyanate de phényle et le lavage final au chloroforme.

Aucun exemple de séparation dans les solvants polaires n'est donné pour le support obtenu.

Okamoto et al. ont décrit (JP 06-206-893) un oligosaccharide lié chimiquement à du gel de silice par l'intermédiaire d'une fonction imine réduite en amine. L'amylose est ensuite régénéré par voie chimioenzymatique à partir de cet oligosaccharide. Les fonctions hydroxyles disponibles sont ensuite dérivées en fonctions carbamates. Aucun exemple de séparation dans un solvant polaire pur n'est donné.

D'autre part, il est intéressant de travailler en surcharge importante de colonne pour des applications préparatives. La possibilité d'utiliser 100 % du matériau chiral sous forme de billes de polymère pur de polysaccharides substitués, au lieu de les déposer physiquement sur support, s'est révélée efficace pour augmenter les rendements massiques des processus de chromatographie chirale préparative. Ainsi les brevets EP-B-348 352, EP-B-316 270 et WO 96/27 639 concernent la réalisation de billes de cellulose pour la séparation d'isomères optiques.

Toutefois, les billes de polymères purs sont solubles dans les solvants polaires comme les solvants halogénés, le tétrahydrofurane ou le dioxane. Il est donc impossible d'utiliser ces solvants purs ou des mélanges avec de fortes proportions de ces derniers, pour réaliser des séparations d'isomères.

Afin de pallier cet inconvénient, Francotte et al. ont préconisé la polymérisation par rayonnement de polysaccharides dérivés (WO 96/27 615).

Toutefois, le taux de polymérisation semble difficile à maîtriser dans un tel procédé. Aucun exemple de séparation n'est donné dans un solvant polaire pur.

Minguillon et al. ont décrit la synthèse de carbamates de cellulose partiellement dérivés avec un chlorure d'undécénoyle. Toutefois, la structure du support n'est pas explicitée (J. of Chromatog. A 728 (1996), 407 - 414 et 415-422).

Lange a décrit (US-A-5 274 167) la polymérisation de dérivés d'acide métacrylique optiquement actifs, la structure du support n'étant pas explicitée. Aucun exemple de séparation dans un solvant polaire pur.

La présente invention concerne de nouveaux supports chiraux et leur utilisation dans la préparation ou la séparation d'énantiomères. Elle concerne également des supports chiraux sous forme de billes de polymères.

Les supports chiraux sont obtenus sous forme de billes de polymère pur de composé chiral habituellement polymérisé et réticulé de préférence en un réseau osidique tridimensionnel ou obtenus sous forme de composé chiral attaché par un lien covalent à un support, puis polymérisé et réticulé de préférence en un réseau osidique tridimensionnel.

Les supports chiraux selon l'invention révèlent une stabilité remarquable dans les solvants polaires tels que le THF (tétrahydrofurane), le chloroforme, le chlorure de méthylène, l'acétonitrile, le toluène, l'acétone ou l'acétate d'éthyle.

Pour la première fois, la séparation d'une molécule racémique sur un support à base de polysaccharide a pu être réalisée dans le chloroforme pur.

Cette stabilité exceptionnelle des nouveaux supports chiraux vis-à-vis des solvants polaires est associée à des cinétiques de transfert de masse entre les solutés et le réseau osidique tridimensionnel extrêmement rapides. Pour la première fois, également, ont pu être réalisées des séparations en mode normal ou inverse par gradient d'élution sur des phases stationnaires chirales.

Nous avons d'autre part noté que le taux de réticulation des supports chiraux avait une influence sur la capacité de gonflement des supports. Ladite capacité de gonflement étant variable, elle présente des difficultés de mise en oeuvre pour des utilisations analytiques ou préparatives dans des processus chromatographiques: volume variable du support, création de pertes de charge importantes lors du gonflement, pouvant induire l'explosion de colonnes insuffisamment dimensionnées ou l'impossibilité de percolation pour celles résistant aux fortes pressions ; on observe également lors de la rétractation la formation de volumes morts incompatibles pour les utilisations courantes.

La possibilité de modifier, par unité chirale, le nombre et la nature des composés bifonctionnels assurant la polymérisation et la réticulation induit l'avantage de pouvoir modifier le taux de réticulation et donc la performance finale du support chiral et permet en particulier de maîtriser sa capacité de gonflement dans les solvants polaires.

D'autre part, nous avons remarqué que l'utilisation de solvants polaires en mélange avec d'autres solvants de type alcane/alcool permettait, dans certains cas, d'inverser l'ordre d'élution des énantiomères de composés d'intérêt biologique. Dans l'analyse de la pureté énantiomérique de molécules chirales, le gain en sensibilité est par conséquent significatif. En effet, le premier composé élué l'est toujours avec un nombre de plateaux théoriques supérieur au second.

D'autre part, et pour les mêmes raisons, le premier énantiomère élué dans un processus de chromatographie préparative chirale est toujours le plus pur et le plus concentré. Il y a donc un intérêt majeur en chromatographie chirale analytique et préparative à pouvoir maîtriser l'ordre de sortie des énantiomères.

Le réseau osidique tridimensionnel des nouveaux supports chiraux offre donc cette possibilité par des effets de "matrice", gonflant plus ou moins en fonction du taux de réticulation du support et de la nature du solvant polaire utilisé. En fonction de la disposition spatiale des mêmes constituants fonctionnels de chaque énantiomère, la matrice favorise l'élution de l'un ou l'autre des énantiomères par une structure tridimensionnelle de forme variable.

La bifonctionnalité permet de lier entre elles des unités chirales, préférentiellement osidiques, par l'intermédiaire d'une ou plusieurs liaisons covalentes permettant de constituer un réseau tridimensionnel polymérisé et réticulé et donc le taux de réticulation dépend :

- du nombre de fonctions -OH, $-NH_2$, -NHR ou -SH de l'unité chirale ayant réagi ou mises en réaction avec les composés :

$$[R\text{-}CH = CH - X - O]_n\ Ar - Q$$

$$[(R_1, R_2, R_3)\ Si - CH(R) - CH2 - X - O]_n\ Ar - Q$$

- du nombre n de ces mêmes formules.

où R, X, n, Ar, $R_1$, $R_2$ et $R_3$ sont explicités ci-après.

La dérivation des fonctions -OH, $-NH_2$ ou -SH est généralement et de préférence partielle dans le cas où l'on souhaite utiliser des solvants polaires et bénéficier des effets de "matrice" qui s'y rapportent. En effet, le taux de réticulation du réseau de préférence osidique chiral tridimentionnel est maximal et les effets de gonflement sont également maximisés ; l'utilisation des méthodes gradients est en général impossible, ainsi que l'utilisation de solvants polaires purs ou de mélanges à forts taux de solvants polaires.

Pour préparer les composés chiraux utilisés pour constituer les supports chiraux de l'invention, on peut mettre en oeuvre une méthode comprenant les étapes successives suivantes :

1/ la synthèse d'au moins un composé bifonctionnel de type alkényloxyaryle ou alkénylaryloxyaryle de formule générale $[R\text{-}CH{=}CH\text{-}(X)\text{-}O\text{-}]_n\text{-}Ar\text{-}Q$,
où Q est un groupement réactif vis-à-vis d'un hydrogène porté par un hétéroatome choisi dans le groupe formé par l'oxygène, l'azote et le soufre ou un précurseur d'un tel groupement, et où :

- n est compris entre 1 et 20
- R est l'hydrogène ou un groupement alkyle linéaire ou ramifié ou un groupement alkoxy, linéaire ou ramifié, ou l'hydroxyle ou un groupement aryle, éventuellement substitué,
- X est un groupement divalent alkyle, linéaire de plus d'un atome de carbone ou ramifié, ou un groupement aryle, éventuellement substitué par au moins un groupement choisi dans le groupe formé par les groupements hydrogène, alkyle, alkoxy, hydroxy ou trihalogénoalkyle,
- Ar est un groupement divalent aryle ou polyaryle, éventuellement substitué par au moins un atome d'hydrogène ou par au moins un groupement choisi dans le groupe formé par les groupements alkyle, alkoxy, hydroxy, trihalogénoalkyle, silyle, thiol, amino, aminoalkyle, amide, nitro, nitrosamino, N-amino, aldéhyde, acide ou ester ;

2/ la réaction d'au moins un hydrogène d'une fonction alcool, amine ou thiol d'au moins une unité chirale d'un produit, de préférence une unité osidique d'un produit choisi parmi les holosides, hétéroholosides, oligosides, cyclooligosides, hétérooligosides, polyosides, hétéropolyosides, enzymes et protéines avec au moins un groupement Q de composé bifonctionnel de l'étape 1/, de façon à synthétiser au moins un composé chiral.

Le composé choisi parmi les holosides, hétéroholosides, oligosides, cyclooligosides, hétérooligosides, polyosides, hétéropolyosides, enzymes et protéines, est généralement choisi parmi les composés suivants : pullulane, béta-2,1-fructane (inuline), béta-1,4-mannane, cellulose, béta-1,3-glucane curdlane, chitosane, dextrané, amylose-cyclodextrines, alpha-1,3-glucane, béta-1,2-glucane, béta-1,4-xylane, dont les formules sont données ci-après.

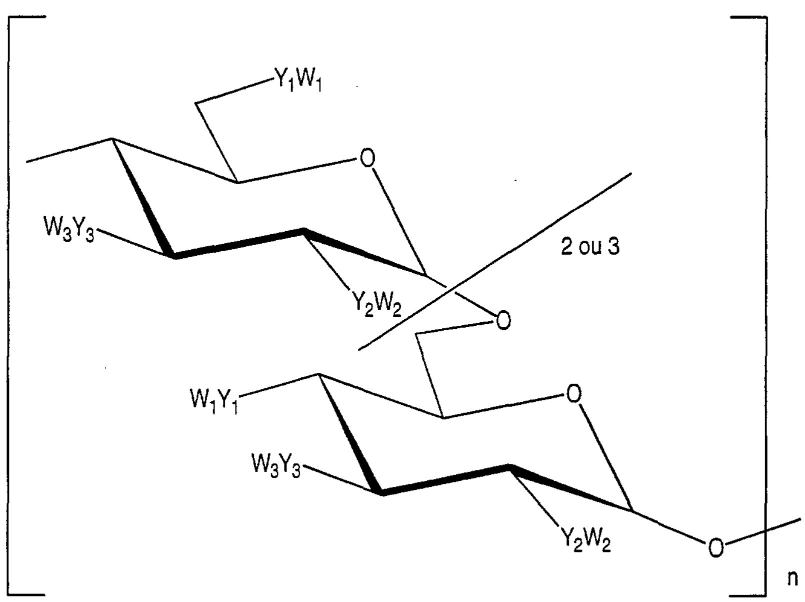

pullulane

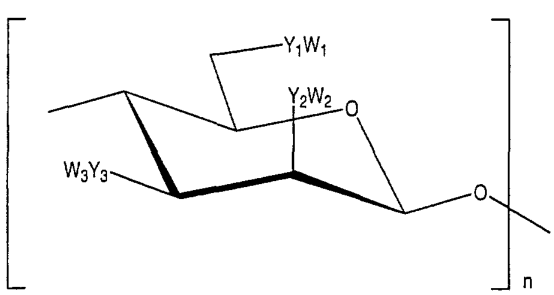

béta-1,4-mannane

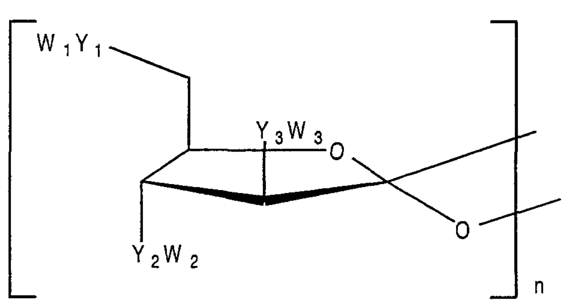

béta-2 ,1-fructane (inuline)

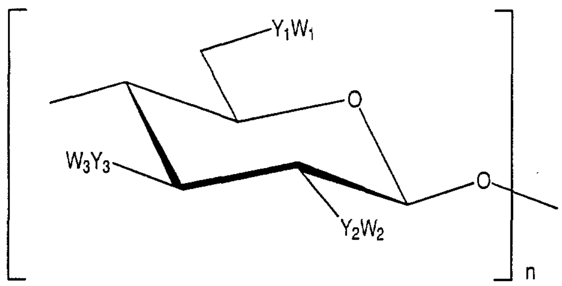

cellulose

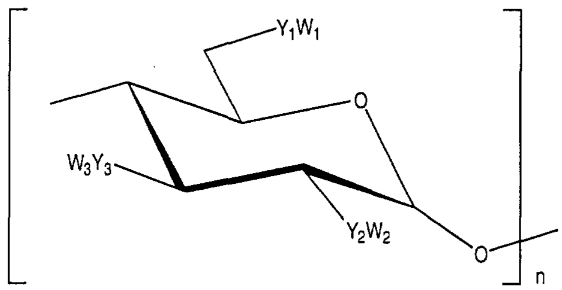

amylose-cyclodextrine

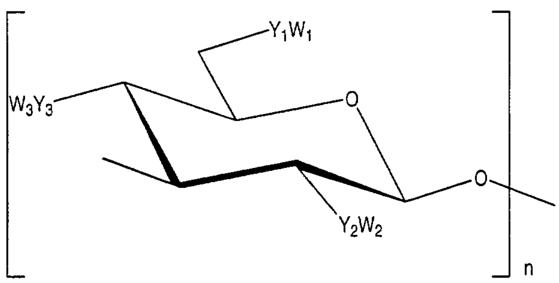

béta-1,3-glucane
curdlane

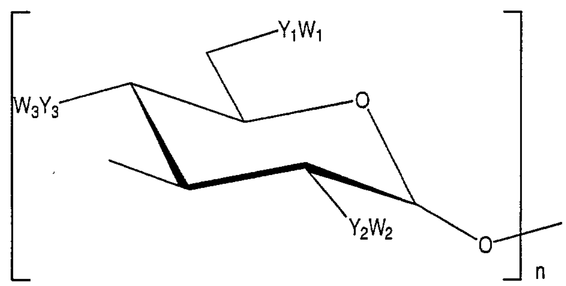

alpha-1,3-glucane

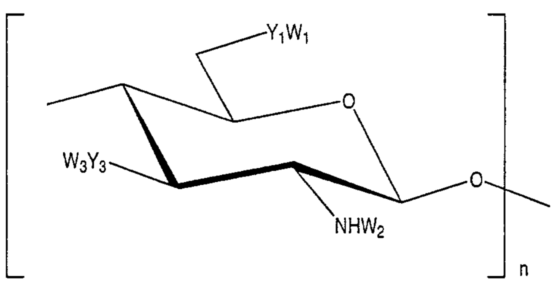

Chitosane

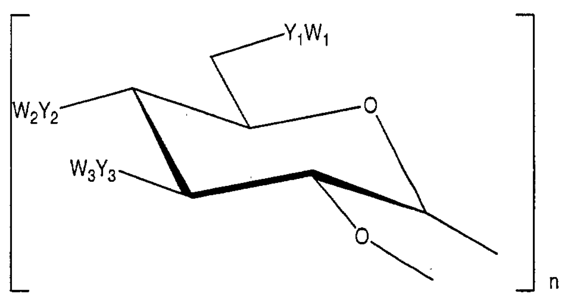

béta-1,2-glucane

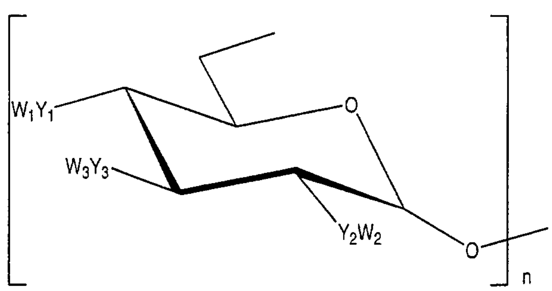

dextrane

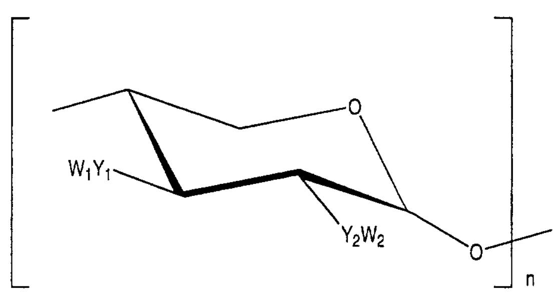

béta-1,4-xylane

où chaque Y (Y1, Y2 ou Y3) représente un atome de soufre, d'oxygène ou le groupement NH chaque W (W1, W2 ou W3) représente un radical éthylénique de formule générale

$$[R\text{-}CH = CH - (X) - O]_n \text{-}Ar - Z -$$

dans laquelle Z représente un groupement NH-CO, ou un groupement -NH-CS, ou un groupement CO, ou un groupement CH2

et dans laquelle les symmboles R, X et Ar sont explicités ci-après ;
où n est un nombre entier compris entre 5 et 2000
et où chaque unité osidique contient au moins 0,05 groupe Y-W;
les groupes Y-W pouvant être identiques ou différents.

De préférence, le groupement Q est choisi dans le groupe formé par les groupements suivants : -N=C=O ou un de ses précurseurs, -NH2, -CON3 ou -COCl ou un de leurs précurseurs, COOH, -N=C=S, -CH2-Y, où Y est Cl ou Br ou I ou le méthylsulfonyloxy ou le paratolènesulfonyloxy ou le 3,5-diméthylphénylsulfonyloxy.

La méthode décrite ci-dessus peut comporter une étape supplémentaire d'hydrosilylation, avant ou après l'étape 2/, de façon à transformer au moins une partie des motifs alcényles R-CH=CH- à l'aide d'un silane (R1,R2,R3) Si-H en présence généralement d'un complexe métallique dérivé du platine ou du rhodium en motifs (R1,R2,R3)-Si-CH (R)-CH2-, où

- R1 est un groupement hydrogène ou alkoxy (méthoxy ou éthoxy) ou halogène ou amino ou alkylamino,
- R2 et R3, identiques ou différents de R1, sont des groupements alkoxy, hydroxy, trihalogénoalkyle, alkyle, linéaires ou ramifiés, ou aryle.
- R est l'hydrogène ou un groupement alkyle linéaire ou ramifié ou un groupement alkoxy linéaire ou ramifié ou l'hydroxyle ou un groupement aryle éventuellement substitué.

L'hydrosilylation a généralement lieu en milieu solvant, en présence d'un catalyseur approprié, tel que du platine.

En particulier, un support chiral selon l'invention peut comprendre au moins un composé chiral polymérisé et réticulé ou les dérivés ester ou amide ou urée ou carbamate ou thioester ou thiocarbamate dudit composé chiral polymérisé et réticulé de formule générale :

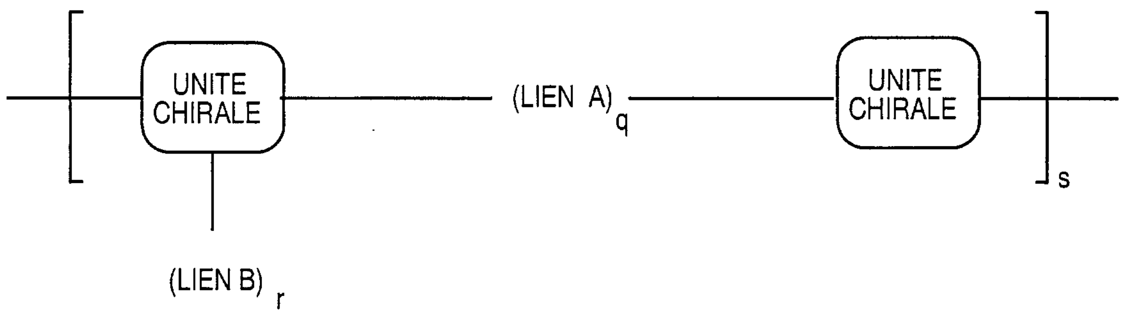

dans laquelle :

- q est au moins égal à 1 et inférieur à 20,
- s est au moins égal à 1 et inférieur à 20 000,
- si r = 0, le composé est un polymère ou oligomère ou monomère chiral pur réticulé,
- si r ≥ 1, le composé est un polymère ou oligomère ou monomère chiral réticulé en un réseau tridimensionnel et lié à un support réticulé.

LIEN A représente :

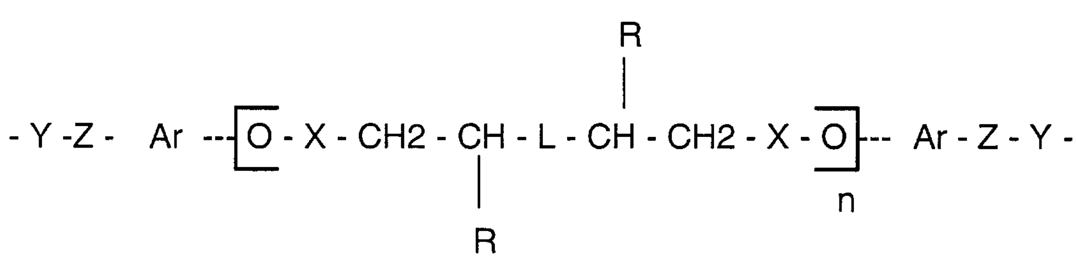

LIEN B représente :

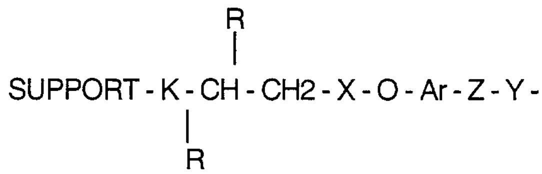

- « unité chirale » représente un composé chiral monomérique, oligomérique, cyclooligomérique ou polymérique et comportant éventuellement une fonction amine primaire ou secondaire ou une fonction hydroxyle primaire, secondaire ou tertiaire ou une fonction sulfhydryle et dans lequel tout ou partie de ces fonctions sont éventuellement modifiées sous forme ester, amide, urée, carbamate, thioester ou thiocarbamate,
- Z représente un groupement - CH2 - ou un groupement -CO- ou un groupement -NH-CO- ou un groupement -NH - CS-
- Y représente un atome de soufre ou d'oxygène ou le groupement amino.
- n est compris entre 1 et 20.
- Ar représente un groupement divalent aryle ou polyaryle.
- X représente un groupement divalent akyle ou aryle.
- R représente un groupement alkyle ou un hydrogène.
- L représente une liaison simple ou un bis-sulfhydryle ou un silane ou un groupement éthylène éventuellement substitué ou un disiloxane
- K représente une liaison simple ou un siloxane ou un silane.
- « Support » représente un support organique ou minéral, fonctionnalisé par un alcène ou un hydrogénosilane ou un sulfhydryle.

Selon l'invention, le suppport chiral peut aussi comprendre au moins un composé chiral polymérisé et réticulé ou les dérivés ester ou amide ou urée ou carbamate ou thioester ou thiocarbamate dudit composé chiral polymérisé et réticulé répondant à la formule générale suivante :

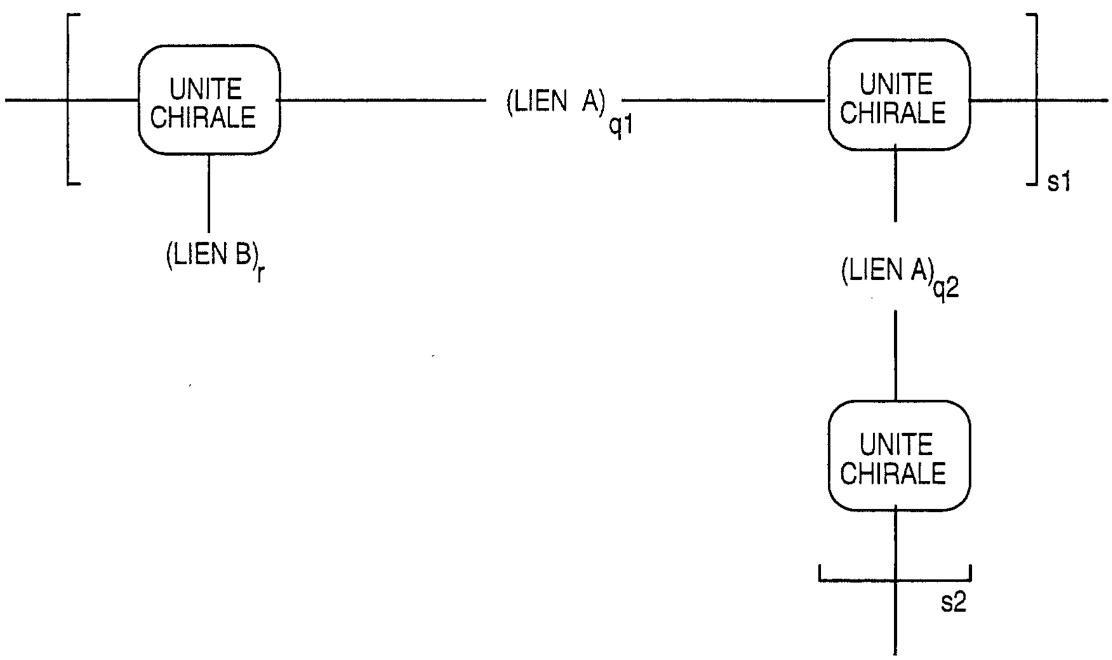

dans laquelle :

- chacun des q1 et q2 est au moins égal à 1 et inférieur à 20 ;
- chacun des s1 et s2 est au moins égal à 1 et inférieur à 20 000 ;
- si r = 0, le composé est un polymère ou oligomère ou monomère chiral pur réticulé ;
- si r ≥ 1, le composé est un polymère ou oligomère ou monomère chiral réticulé en un réseau tridimensionnel et

lié à un support réticulé ;

- LIEN A représente :

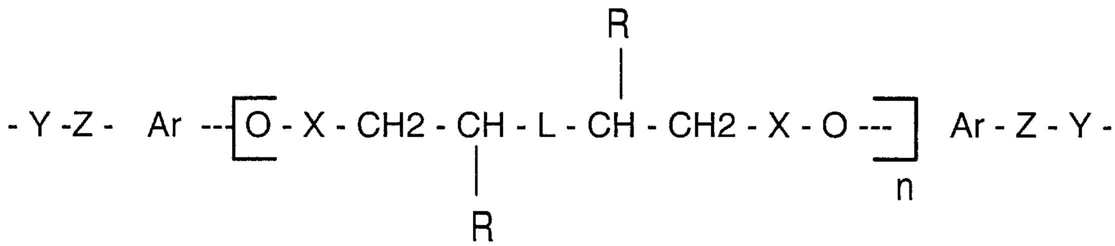

- LIEN B représente :

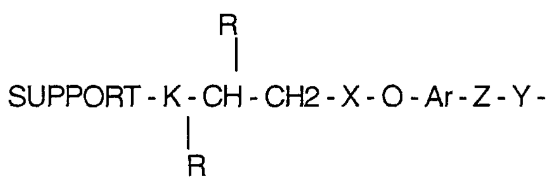

- "unité chirale" représente un composé chiral monomérique, oligomérique, cyclooligomérique ou polymérique et comportant éventuellement une fonction amine primaire ou secondaire, une fonction hydroxyle primaire, secondaire ou tertiaire ou une fonction sulfhydryle et dans lequel tout ou partie de ces fonctions sont éventuellement modifiées sous forme ester, amide, urée, carbamate, thioester ou thiocarbamate ;
- Z représente un groupement -CH2- ou un groupement -CO- ou un groupement -NH-CO- ou un groupement -NH-CS- ;
- Y représente un atome de soufre ou d'oxygène ou le groupement amino ;
- n est compris entre 1 et 20 ;
- Ar représente un groupement aryle ou polyaryle ;
- X représente un groupement alkyle ou aryle ;
- R représente un groupement alkyle ou un hydrogène ;
- L représente une liaison simple ou un bis-sulfhydryle ou un silane ou un groupement éthylène éventuellement substitué ou un disiloxane ;
- K représente une liaison simple ou un siloxane ou un silane ; et
- "SUPPORT" représente un support organique ou minéral, fonctionnalisé par un alcène, un hydrogénosilane ou un sulfhydryle.

Ainsi, ledit composé ou un de ses dérivés possède de préférence l'une des formules suivantes :

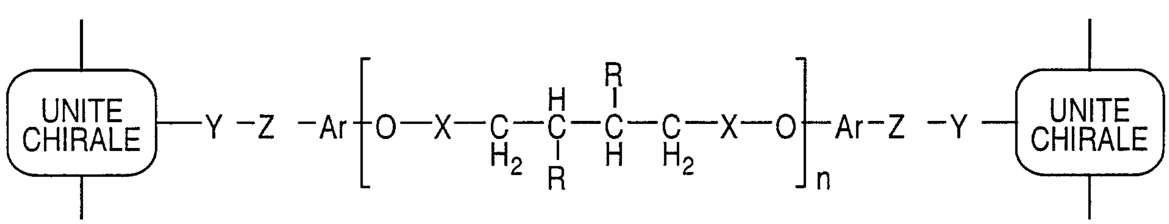

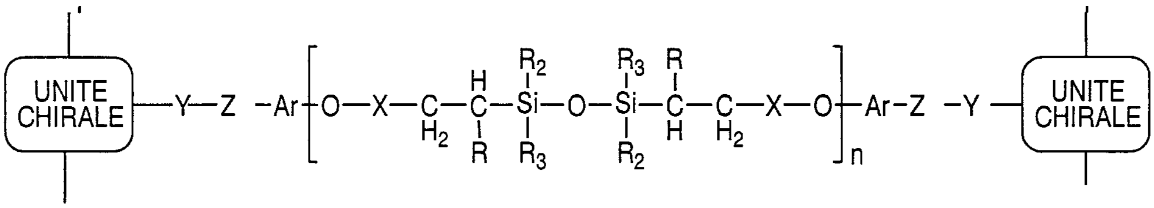

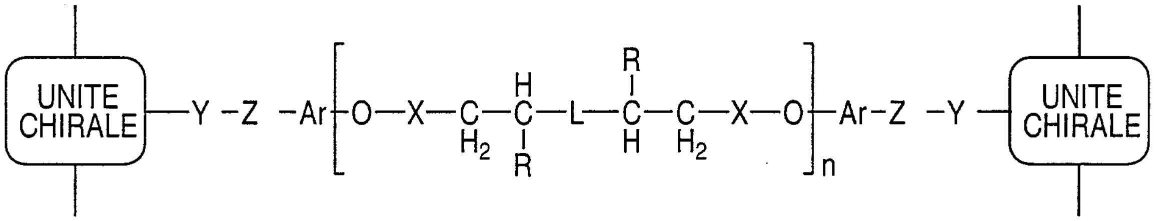

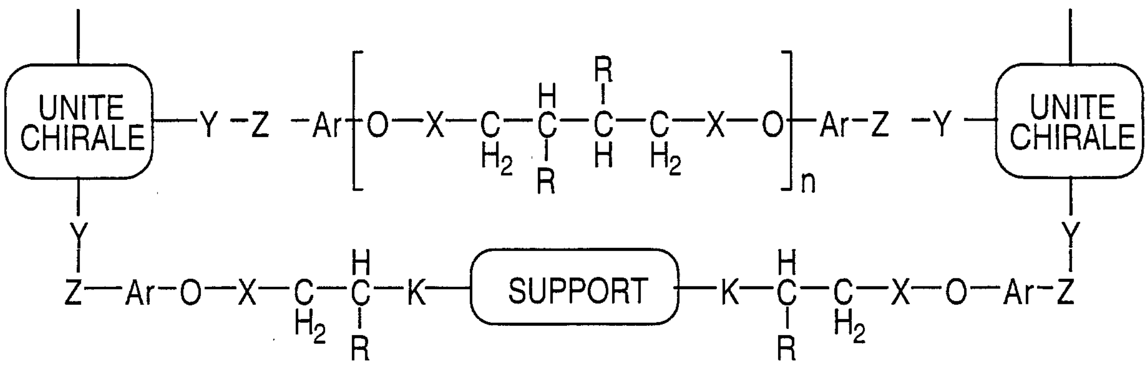

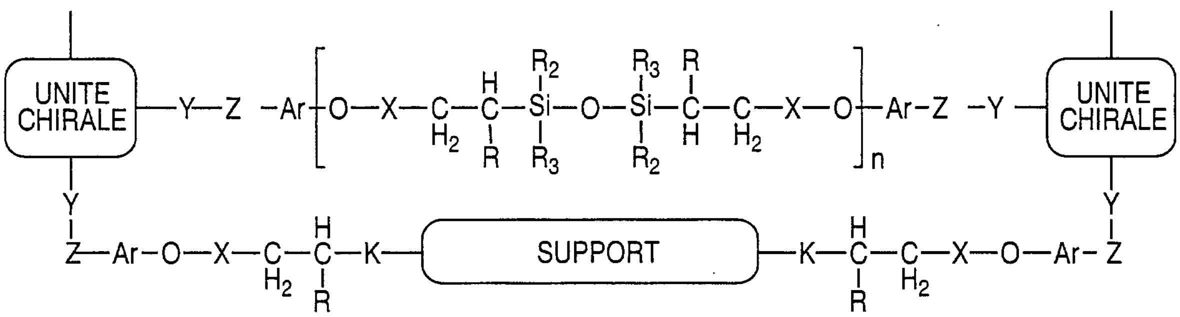

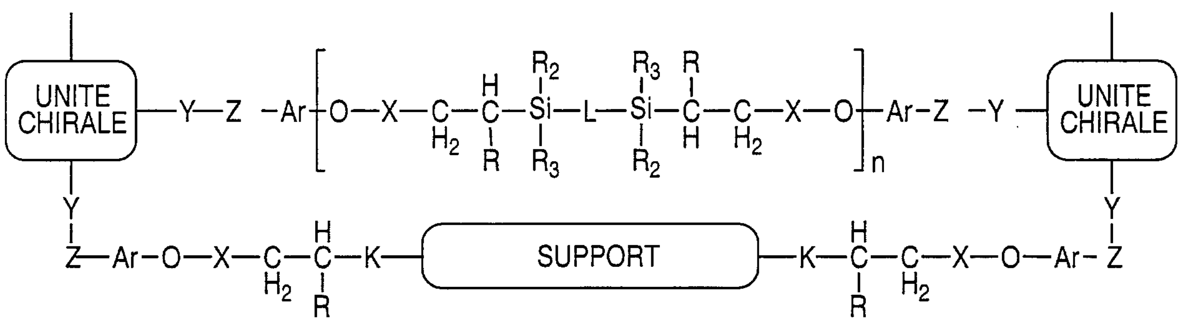

La méthode d'obtention des supports chiraux de l'invention comporte de préférence une étape supplémentaire

de traitement d'au moins une partie du composé chiral obtenu précédemment. Généralement ledit traitement est choisi dans le groupe formé par les trois traitements décrits ci-après.

Un premier traitement dudit composé chiral consiste à réaliser le dépôt physique d'au moins une partie dudit composé sur un support. Un tel traitement consiste généralement en l'ajout, sur le composé chiral mis en solution dans un solvant polaire en présence d'un support, d'un co-solvant, ledit ajout étant suivi d'une précipitation dudit composé sur ledit support, ou bien à l'évaporation du composé chiral mis en solution dans un solvant polaire en présence d'un support.

Un deuxième traitement dudit composé chiral consiste à réaliser le dépôt physique puis le greffage par liaison covalente d'au moins une partie dudit composé chiral sur un support, ledit support étant préalablement dérivé au moins en partie par au moins un groupement choisi dans le groupe formé par les groupements alkoxy, halogéno ou aminosilanes comportant également la fonction de type -SH, -SiH ou -CH=CH-. Le deuxième traitement comprend généralement l'addition des fonctions alcényles libres de ladite partie du composé chiral sur ledit support préalablement dérivé suivi de la réticulation in situ des fonctions alcényles restantes pour constituer un réseau chiral tridimensionnel. La réaction est en général conduite dans un solvant à haut point d'ébullition, tel que par exemple un hydrocarbure, de façon à favoriser la cinétique. La réaction de greffage entre au moins une partie des fonctions alcényles des unités chirales (de préférence osidiques) de ladite partie du composé chiral et au moins une partie des fonctions -SH, -SiH ou -CH=CH- du support dérivé ont généralement lieu dans un solvant organique en présence d'un catalyseur approprié tels que les peroxydes ou les sels de platine. Dans le cas où le composé chiral a subi l'étape supplémentaire d'hydrosilylation, le greffage est conduit généralement sur au moins une partie des fonctionnalités terminales de type hydrogène, alkoxy, halogéno ou alkylaminosilane.

En ce qui concerne les premier et deuxième traitements, le support est généralement choisi dans le groupe formé par les supports de type gel de silice native ou modifiée, les oxydes de zircone, de magnésium, d'aluminium, de titane, les billes de verre, les carbones ou tout polymère organique.

Un troisième traitement dudit composé chiral consiste à réaliser au moins en partie la polymérisation généralement par réticulation d'au moins une partie dudit composé chiral, de façon à obtenir des billes de polymères qui constituent essentiellement un support chiral. Une mise en oeuvre possible du troisième traitement comprend généralement la mise en solution de ladite partie du composé chiral dans un solvant approprié puis la mise en réaction dans un milieu biphasé, suivie de l'évaporation dudit solvant de façon à obtenir le polymère sous forme de billes ou de particules irrégulières, puis la polymérisation par réticulation intra- ou inter-moléculaire d'au moins une partie des motifs alcényles des unités de préférence osidiques de ladite partie du composé chiral, par chauffage en présence d'initiateur de polymérisation tels que les peroxydes. Une autre mise en oeuvre du troisième traitement comprend les mêmes étapes, à l'exception de la polymérisation par réticulation qui est obtenue par hydrosilylation, à l'aide d'hydrosilanes ou d'hydrosiloxanes, d'au moins une partie des fonctions alcényles de ladite partie du composé chiral sur des composés bifonctionnels de type dithiols HS-(...)-SH, dihydrogénosilanes HSi-(..)-SiH, ou composés polyfonctionnels de type tetraméthyldisiloxane ou 1,3,5,7-tétraméthyl cyclo-tétrasiloxane ou méthylhydrocyclosiloxanes ou de type éthanedithiol ou avec du soufre.

La polymérisation par réticulation est connue per se et décrite, par exemple dans J. Chromatogr. 1992, 594, 283-290. La technique décrite dans cet article peut être utilisée pour obtenir les supports chiraux de l'invention sous forme de billes de polymères. La réaction est en général conduite dans un solvant inerte vis-à-vis de l'hydrosilylation comme le toluène, le dioxane 1,4, le chloroforme, le tétrahydrofurane (THF) et le xylène ou les mélanges de ces solvants, à des températures variant de 40 à 140°C. L'utilisation de catalyseur comme les complexes métalliques de platine ou de rhodium accélère la cinétique de la réaction.

Les hydrosilanes ou hydrosiloxanes qui peuvent être utiles à la préparation des supports chiraux peuvent être définis par la formule générale suivante :

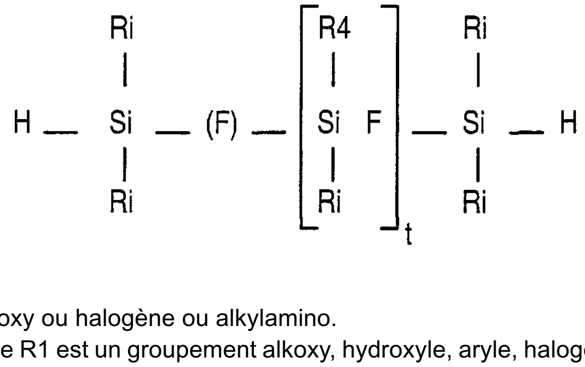

R4 : est un groupement alkoxy ou halogène ou alkylamino.

Ri : identique ou différent de R1 est un groupement alkoxy, hydroxyle, aryle, halogène, alkylamino, trihalogénoalkyle, alkyle linéaire ou ramifié.

F : est $(CH_2)_u$ ou l'oxygène

t : varie de 0 à 3000

u : varie de 0 à 10.

Dans le cas où le composé chiral a subi l'étape supplémentaire d'hydrosilylation, la polymérisation a principalement lieu grâce à l'hydrolyse contrôlée d'au moins une partie des fonctions terminales de type hydrogénosilanes, alkoxysilanes, halogénosilanes ou N-alkylaminosilanes, qui conduit principalement à des particules sensiblement sphériques de polymère pur.

Le support chiral obtenu précédemment par un des trois traitements est de préférence utilisé selon la méthode de l'invention dans une opération de séparation de composés chiraux ou de préparation d'énantiomères. Ladite opération est généralement choisie parmi les méthodes suivantes : la chromatographie liquide, généralement la chromatographie liquide à usage préparatif ou analytique, comprenant les techniques suivantes : chromatographie liquide basse, moyenne et haute pression (HPLC), chromatographie à contre-courant et chromatographie en lit mobile simulé, la chromatographie gazeuse, généralement analytique ou préparative, la chromatographie supercritique, la chromatographie subcritique, la chromatographie de partage centrifuge, l'électrophorèse, l'éléctrochromatographie, ou tout procédé de séparation membranaire, ainsi que la synthèse asymétrique.

Pour préparer des polymères utilisés dans l'obtention des supports chiraux de l'invention, on peut mettre en oeuvre un procédé de synthèse comprenant les étapes successives suivantes :

1/ la synthèse d'au moins un composé bifonctionnel de type alkényloxyaryle ou alkénylaryloxyaryle de formule générale $[R\text{-}CH=CH\text{-}(X)\text{-}O\text{-}]_n\text{-}Ar\text{-}Q$, où Q est un groupement choisi dans le groupe formé par les groupements suivants :- N = C = O ou son précurseur, - NH2 ou - CON3, -COCl ou son précurseur, - COOH, - N = C = S, - $CH_2Y$, où Y est Cl ou Br ou I ou le méthylsulfonyloxy ou le paratoluènesulfonyloxy ou le 3,5-diméthylphénylsulfonyloxy, et où :

- n est compris entre 1 et 20,
- R est l'hydrogène ou un groupement alkyle linéaire ou ramifié ou un groupement alkoxy linéaire ou ramifié ou l'hydroxyle ou un groupement aryle éventuellement substitué,
- X est un groupement alkyle linéaire ou ramifié ou un groupement aryle éventuellement substitué par au moins un groupement choisi dans le groupe formé par les groupements hydrogène, alkyle, alkoxy, hydroxy ou trihalogénoalkyle
- Ar est un groupement aryle ou polyaryle, éventuellement substitué par au moins un atome d'hydrogène ou un groupement choisi dans le groupe formé par les groupements alkyle, alkoxy, hydroxy, trihalogénoalkyle, silyle, thiol, amino, aminoalkyle, amide, nitro, nitrosamino, N-amino, aldéhyde, acide ou ester.

2/ la polymérisation par le motif alcényle ou par le groupement R1 du composé bifonctionnel de l'étape 1/, de façon à synthétiser au moins un polymère fonctionnalisé par un groupement Q.

Les composés bifonctionnels de type alkényloxyaryle ou alkénylaryloxyaryle utilisés dans la préparation des composés chiraux entrant dans la constitution des supports chiraux de l'invention,de formule générale $[R\text{-}CH=CH\text{-}(X)\text{-}O\text{-}]_n\text{-}Ar\text{-}Q$, où Q est un groupement réactif vis-à-vis d'un hydrogène porté par un hétéroatome choisi dans le groupe formé par l'oxygène, l'azote et le soufre, ou un précurseur d'un tel groupement, et où :

- n est compris entre 1 et 20
- R est l'hydrogène ou un groupement alkyle linéaire ou ramifié ou un groupement alkoxy linéaire ou ramifié ou l'hydroxyle ou un groupement aryle éventuellement substitué,
- X est un éventuel groupement divalent alkyle linéaire ou ramifié ou un groupement aryle éventuellement substitué par au moins un groupement choisi dans le groupe formé par les groupements hydrogène, alkyle, alkoxy, hydroxy ou trihalogénoalkyle
- Ar est un groupement divalent aryle ou polyaryle, éventuellement substitué par au moins un atome d'hydrogène ou par au moins un groupement choisi dans le groupe formé par les groupements alkyle, alkoxy, hydroxy, trihalogénoalkyle, silyle, thiol, amino, aminoalkyle, amide, nitro, nitrosamino, N-amino, aldéhyde, acide ou ester, à l'exclusion des composés suivants : la 4-allyloxyaniline, l'acide 4-allyloxybenzoïque, son chlorure d'acide et la 4-allyloxyphénylisocyanate. La synthèse et/ou l'emploi desdits composés est décrite dans les articles :

  - M.A. Apfel, H. Finkelmann, G.M. Janini, R.J. Laub, B.H. Lühmann, A. Price, W.L. Roberts, T.J. Shaw, and C. A. Smith, Analytical chemistry, 1985, 57, 651-658.

- Y. Nambu and T. Endo, Journal of Organic Chemistry, 1993, 58, 1932-1934.
- G. Yi, J.S. Bradshaw, B.E. Rossiter, S.L. Reese, R. Petersson, K.E. Markides and M.L. Lee, Journal of Organic Chemistry, 1993, 58, 2561-2565.
- G. Yi, J.S. Bradshaw, N.E. Rossiter, A. Malik, W. Li, H. Yun, M.L. Lee, Journal of Chromatography A, 673 (1994), 219-230.
- G. Yi, J.S. Bradshaw, B.E. Rossiter, A. Malik, H. Yun and M.L. Lee, Journal of Heterocyclic Chemistry, 352, 621 (1995).
- G. Yi, W. Li, J.S. Bradshaw, A. Malik, M.L. Lee, Journal of Heterocyclic Chemistry, 32, 1715 (1995).


De préférence, le groupement Q est choisi dans le groupe formé par les groupements suivants :- N = C = O ou son précurseur, $-NH_2$ ou $-CON_3$, -COCl ou son précurseur, -COOH, - N = C = S, -CH2-Y, où Y est Cl ou Br ou I ou le méthylsulfonyloxy ou le paratoluènesulfonyloxy ou le 3,5-diméthylphénylsulfonyloxy.

Les composés chiraux utilisés pour l'obtention des supports chiraux de l'invention sont susceptibles d'être obtenus par réaction de substitution d'au moins un hydrogène d'une fonction alcool, amine ou thiol d'au moins une unité chirale d'un produit, de préférence d'une unité osidique d'un produit choisi parmi les holosides, hétéroholosides, oligosides, cyclooligosides, hétérooligosides, polyosides, hétéropolyosides, enzymes et protéines, avec au moins un groupement Q du composé bifonctionnel précédent. On considère aussi les composés chiraux susceptibles d'être obtenus par réaction d'hydrosilylation desdits composés chiraux substitués ci-dessus, de façon à transformer au moins une partie des motifs alcényles R-CH=CH- à l'aide d'un silane (R1,R2,R3) Si -H en présence généralement d'un complexe métallique dérivé du platine ou du rhodium en motifs (R1,R2,R3)-Si-CH(R)-CH2-, où :

R1 est un groupement hydrogène ou alkoxy ou halogène ou amino ou alkylamino,
R2 et R3, identiques ou différents de R1, sont des groupements alkoxy, hydroxy, trihalogénoalkyle ou alkyle, linéaire ou ramifié, ou aryle ;
R est l'hydrogène ou un groupement alkyle, linéaire ou ramifié, ou un groupement alkoxy, linéaire ou ramifié, ou l'hydroxyle ou un groupement aryle éventuellement substitué.

Les composés chiraux utilisés dans l'obtention des supports chiraux de l'invention sont également susceptibles d'être obtenus par réaction d'hydrosilylation du composé bifonctionnel, de façon à transformer au moins une partie des motifs alcényles R-CH=CH- à l'aide d'un silane (R1,R2,R3) Si-H en présence généralement d'un complexe métallique dérivé du platine ou du rhodium en motifs (R1,R2,R3)-Si-CH(R)-CH2-, où :

R est un groupement hydrogène ou alkoxy ou halogène ou amino ou alkylamino,
R2 et R3, identiques ou différents de R1, sont des groupements alkoxy, hydroxy, trihalogénoalkyle ou alkyle, linéaire ou ramifié, ou aryle ;
R est l'hydrogène ou un groupement alkyle, linéaire ou ramifié, ou un groupement alkoxy, linéaire ou ramifié, ou l'hydroxyle ou un groupement aryle éventuellement substitué ;
puis par réaction d'au moins un hydrogène d'une fonction alcool amine ou thiol d'au moins une unité chirale d'un produit, de préférence une unité osidique d'un produit choisi parmi les holosides, hétéroholosides, oligosides, cyclooligosides, hétérooligosides, polyosides, hétéropolyosides, enzymes et protéines, avec au moins un groupement Q dudit composé bifonctionnel.

L'invention concerne aussi tout support chiral susceptible d'être obtenu à partir des composés chiraux précédents, par dépôt physique sur un support. L'invention concerne aussi tout support chiral susceptible d'être obtenu à partir des composés chiraux précédents et d'un support, ledit support étant préalablement dérivé par au moins un groupement choisi dans le groupe formé par les groupements alkoxy, halogéno ou aminosilanes comportant également la fonction de type -SH, -SiH ou -CH=CH-, par réalisation de liaisons chimiques covalentes par au moins une partie des motifs alcényles desdits composés chiraux suivie de la réticulation in situ des fonctions alcényles restantes pour constituer un réseau chiral tridimensionnel.

L'invention concerne plus généralement tout support chiral comportant au moins un des composés chiraux précédents et au moins un support. De préférence, ledit composé est lié chimiquement audit support, par au moins une liaison chimique covalente.

Le support est généralement choisi dans le groupe formé par les supports de type gel de silice native ou modifiée, les oxydes de zircone, de magnésium, d'aluminium, de titane, les billes de verre, les carbones ou tout polymère organique.

L'invention concerne aussi tout support chiral susceptible d'être obtenu à partir d'au moins un des composés chiraux précédents par polymérisation généralement par réticulation d'au moins une partie des motifs alcényles dudit composé chiral de façon à obtenir des billes de polymères.

L'invention concerne plus généralement tout support chiral comportant des billes d'au moins un des composé chiraux précédents.

Enfin, l'invention concerne aussi tout procédé de séparation de composés chiraux ou de préparation d'énantiomères par utilisation d'au moins un support chiral précédent dans une opération choisie parmi les méthodes suivantes : la chromatographie liquide, la chromatographie gazeuse, la chromatographie supercritique, la chromatographie subcritique, la chromatographie de partage centrifuge, l'électrophorèse, l'éléctrochromatographie ou tout procédé de séparation membranaire, ainsi que la synthèse asymétrique.

Les exemples suivants illustrent l'invention sans toutefois en limiter la portée.

**Exemples :**

**1 - Préparation de supports chromatographiques selon l'invention**

a) Préparation de l'acide parapent-4-ènoxybenzoïque :

Dans un réacteur, on place successivement 2 g d'hydroxyde de sodium, 15 ml d'eau distillée, 7,6 g de 4-hydroxybenzoate de méthyle, 0,16 g de bromure de tétrabutylammonium et 5,92 ml de 5-bromopent-1-ène. Une agitation vigoureuse est maintenue à température ambiante pendant une nuit. Après avoir ajouté 30 ml d'une solution d'hydroxyde de sodium 2,5 M, le milieu réactionnel est chauffé à 60-80°C pendant 90 minutes. Il est ensuite dilué avec 120 ml d'eau distillée et extrait avec deux fois 50 ml d'éther diéthylique. La phase aqueuse est acidifiée avec 10 ml d'acide chlorhydrique concentrée pour permettre la précipitation de l'acide. Après filtration, lavage à l'eau distillée puis séchage dans un dessicateur sur $P_2O_5$, l'acide est obtenu avec un rendement de 93%.

b) Préparation du chlorure d'acide de l'acide parapent-4-ènoxybenzoïque :

10,3 g d'acide parapent-4-ènoxybenzoïque sont mis en suspension dans 60 ml de toluène auquel on ajoute 17 ml de chlorure de thionyle. Le mélange réactionnel est chauffé à reflux pendant 30 minutes puis évaporé sous vide. Le résidu huileux obtenu est distillé sous vide (110°C/1mm de Hg). Le rendement de cette synthèse est de 85%.

c) Préparation du parapent-4-ènoxybenzoylazide

A une solution aqueuse d'azoture de sodium (3,9 g dans 22 ml d'eau distillée), on ajoute goutte à goutte une solution de 11,27 g de chlorure de parapent-4-ènoxybenzoyle dissous dans 15 ml d'acétone à température ambiante en maintenant une agitation vigoureuse. A la fin de l'addition, le milieu réactionnel est agité pendant une heure puis dilué avec 50 ml d'eau. Après décantation, l'huile incolore obtenue est séchée sur sulfate de magnésium.(Rendement = 80%).

d) Préparation du parapent-4-ènoxyphénylisocyanate

11,6 g de parapent-4-ènoxybenzoylazide sont mis en solution dans 80 ml de toluène anhydre puis porté à reflux pendant 90 min. Le solvant est ensuite évaporé sous vide et le résidu qui se présente sous l'aspect d'une huile incolore est distillé sous vide (100°C/1mm de Hg). Le rendement de cette synthèse est de 94%.

**2 -**

a) Préparation d'une cellulose tris[2,3,6-(4-allyloxyphényl)uréthane] (pour préparation d'un support de type B)

Dans un réacteur, on place 2,5 g de cellulose microcrystalline, 75 ml de pyridine et 38 ml d'heptane. L'agitation et le chauffage du milieu réactionnel permet de déshydrater la cellulose par entraînement azéotropique. 9,31 g de 4-allyloxyphénylisocyanate et 0,05 g de 4-diméthylaminopyridine sont additionnés au mélange et le reflux est maintenue pendant 8 heures. A la fin de la réaction, on ajoute 65 ml de méthanol et le reflux est poursuivi pendant 15 minutes. La cellulose dérivée est ensuite lavée trois fois avec 300 ml d'eau distillée puis 140 ml de méthanol.

b) Préparation d'une cellulose tris[6-(4-allyloxyphényl)uréthane,2,3,6-(3,5-diméthylphényl)uréthane] (pour préparation d'un support de type A)

Dans un réacteur, on place 2,5 g de cellulose microcrystalline, 75 ml de pyridine et 38 ml d'heptane. L'agitation et le chauffage du milieu réactionnel permet de déshydrater la cellulose par entraînement azéotropique. 1,35 g de 4-allyloxyphénylisocyanate, 6,80 g de 3,5-diméthylphénylisocyanate et 0,05 g de 4-diméthylaminopyridine sont additionnés au mélange et le reflux est maintenue pendant 8 heures. A la fin de la réaction, on ajoute 65 ml de méthanol et le reflux est poursuivi pendant 15 minutes. La cellulose dérivée est ensuite lavée trois fois avec 300 ml d'eau distillée puis 140 ml de méthanol.

**3 - Composite obtenu entre une cellulose dérivée et une silice modifiée ( silice mercaptopropyle).**

a) Préparation d'une silice mercaptopropyle

Dans un réacteur, on place 10 g de silice Kromasil (5µm, 100Å où 1Å = 0,1nm)) en suspension dans 50 ml de toluène. Le milieu est porté à reflux pour déshydrater la silice par entraînement azéotropique. On ajoute ensuite 45 ml de mercaptopropyltriméthoxysilane et 20 ml de pyridine. Le mélange réactionnel est agité et chauffé à 110°C pendant deux jours. Après filtration et lavage au méthanol et au diéthyléther puis séchage à 60°C sous vide, on obtient une silice mercaptopropyle avec un taux de greffage de 0,85 mmol/g en fonction thiol.

b) Préparation du composite

b1) Pour support de type B : 0,45 g de cellulose tris[2,3,6-(4-allyloxyphényl)uréthane] sont mis en solution dans 27 ml de tétrahydrofurane, puis on ajoute 3 g de silice Kromasil mercaptopropyle. Après un dégazage aux ultrasons pendant trois minutes, on évapore à sec. Le composite formé est filtré, puis séché à l'air libre.
b2) Pour support de type A : 0,45 g de cellulose tris[6-(4-allyloxyphényl)uréthane,2,3,6-(3,5-diméthylphényl) uréthane] sont mis en solution dans 27 ml de tétrahydrofurane, puis on ajoute 3 g de silice Kromasil mercaptopropyle. Après un dégazage aux ultrasons pendant trois minutes, on évapore à sec. Le composite formé est filtré, puis séché à l'air libre.

**4 -**

a) Préparation d'un support chromatographique de type A :

Le composite tel que préparé ci-dessus (3 - b2) est mis en solution dans 17 ml d'heptane en présence d'une quantité catalytique de peroxyde de benzoyle. Le milieu réactionnel est porté à reflux pendant 14 heures, puis filtré et séché à l'air libre.

b) Préparation d'un support chromatographique de type B :

Le composite tel que préparé ci-dessus (3 - b1) est mis en solution dans 17 ml d'heptane en présence d'une quantité catalytique de peroxyde de benzoyle. Le milieu réactionnel est porté à reflux pendant 14 heures puis filtré et séché à l'air libre.
Les exemples qui précèdent peuvent être répétés avec des résultats analogues en substituant les réactifs et/ou les conditions générales ou particulières décrites dans l'invention à ceux mis en oeuvre dans ces exemples.

## Revendications

1. Support chiral **caractérisé en ce qu'**il comprend au moins un composé chiral polymérisé et réticulé ou au moins un dérivé ester, amide, urée, carbamate, thioester ou thiocarbamate d'un tel composé chiral et **en ce qu'**il répond à la formule générale (1) suivante :

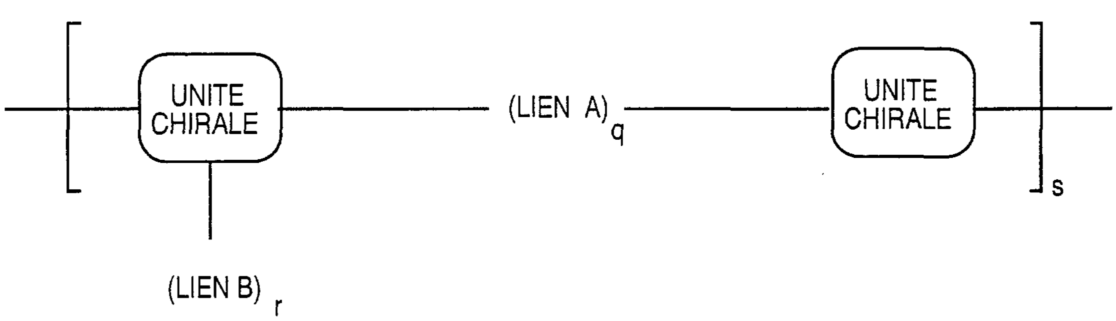

dans laquelle :

- q est au moins égal à 1 et inférieur à 20,
- s est au moins égal à 1 et inférieur à 20 000,
- si r = 0, le composé est un polymère ou oligomère ou monomère chiral pur réticulé,
- si r > 1, le composé est un polymère ou oligomère ou monomère chiral réticulé en un réseau tridimensionnel et lié à un support réticulé.
- LIEN A représente :

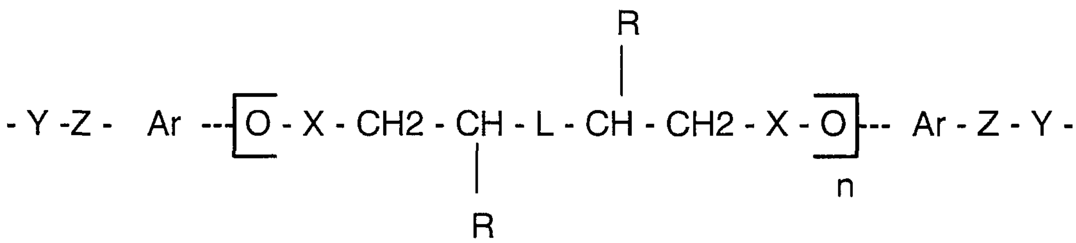

- LIEN B représente :

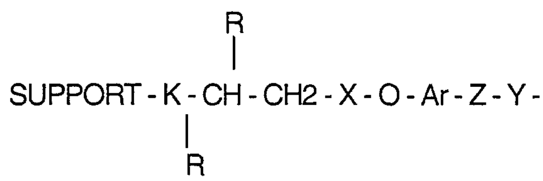

- UNITE CHIRALE représente un composé chiral monomérique, oligomérique, cyclooligomérique ou polymérique comportant éventuellement une fonction amine primaire ou secondaire, une fonction hydroxyle primaire, secondaire ou tertiaire ou une fonction sulfhydryle et dans lequel tout ou partie de ces fonctions sont éventuellement modifiées sous forme ester, amide, urée, carbamate, thioester ou thiocarbamate,

et où :

- Z représente un groupement -CH2-, -CO-, -NH-CO- ou -NH-CS- ;
- Y représente un atome de soufre ou d'oxygène ou le groupement amino ;
- n est compris entre 1 et 20 ;
- Ar représente un groupement aryle ou polyaryle ;
- X représente un groupement alkyle ou aryle ;
- R représente un groupement alkyle ou un hydrogène ;
- L représente une liaison simple ou un bis-sulfhydryle ou un silane ou un groupement éthylène éventuellement substitué ou un disiloxan ;
- K représente une liaison simple ou un siloxane ou un silane ;
- SUPPORT représente un support organique ou minéral, fonctionnarisé par un alcène ou un hydrogénosilane ou un sulfhydryle.

**2.** Support chiral **caractérisé en ce qu'**il comprend au moins un composé chiral polymérisé et réticulé ou au moins un dérivé ester, amide, urée, carbamate, thioester ou thiocarbamate d'un tel composé chiral et **en ce qu'**il répond à la formule générale suivante :

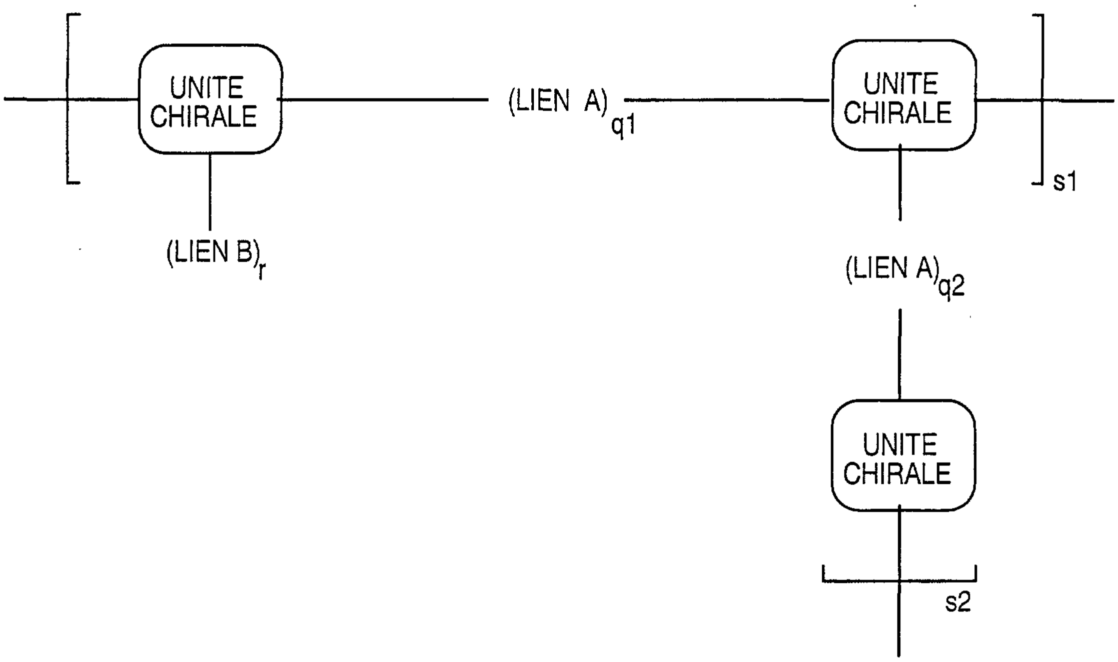

dans laquelle :

- chacun des q1 et q2 est au moins égal à 1 et inférieur à 20 ;
- chacun des s1 et s2 est au moins égal à 1 et inférieur à 20 000 ;
- si r = 0, le composé est un polymère ou oligomère ou monomère chiral pur réticulé ;
- si r ≥ 1, le composé est un polymère ou oligomère ou monomère chiral réticulé en un réseau tridimensionnel et lié à un support réticulé ;
- LIEN A représente

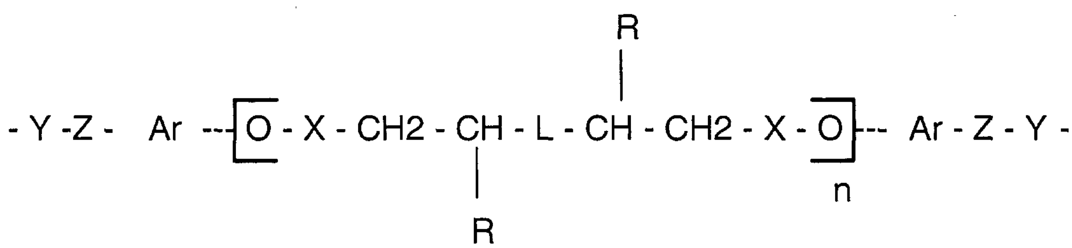

- LIEN B représente :

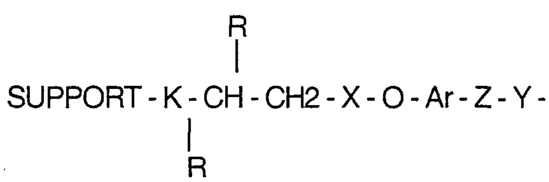

- UNITE CHIRALE représente un composé chiral monomérique, oligomérique, cyclooligomérique ou polymérique et comportant éventuellement une fonction amine primaire ou secondaire, une fonction hydroxyle primaire, secondaire ou tertiaire ou une fonction sulfhydryle et dans lequel tout ou partie de ces fonctions sont éventuellement modifiées sous forme ester, amide, urée, carbamate, thioester ou thiocarbamate ;
- Z représente un groupement -CH2- ou un groupement -CO- ou un groupement -NH-CO- ou un groupement -NH-CS- ;

- Y représente un atome de soufre ou d'oxygène ou le groupement amino ;
- n est compris entre 1 et 20 ;
- Ar représente un groupement aryle ou polyaryle ;
- X représente un groupement alkyle ou aryle ;
- R représente un groupement alkyle ou un hydrogène ;
- L représente une liaison simple ou un bis-sulfhydryle ou un silane ou un groupement éthylène éventuellement substitué ou un disiloxane ;
- K représente une liaison simple ou un siloxane ou un silane ; et
- SUPPORT représente un support organique ou minéral, fonctionnarisé par un alcène ou un hydrogénosilane ou un sulfhydryle.

**3.** Support chiral selon la revendication 1 ou 2 **caractérisé en ce qu'**il comprend des motifs répondant à l'une des formules suivantes :

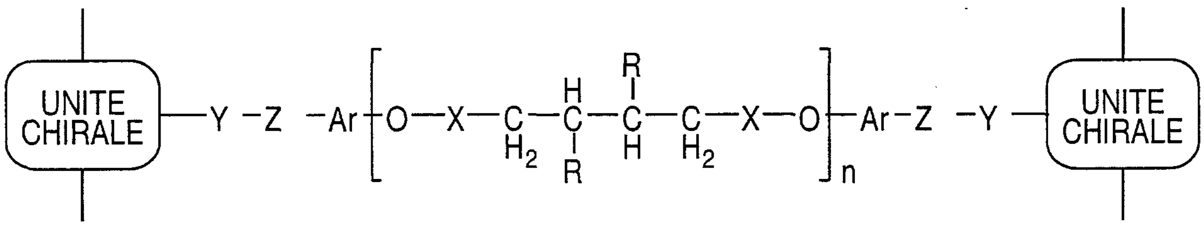

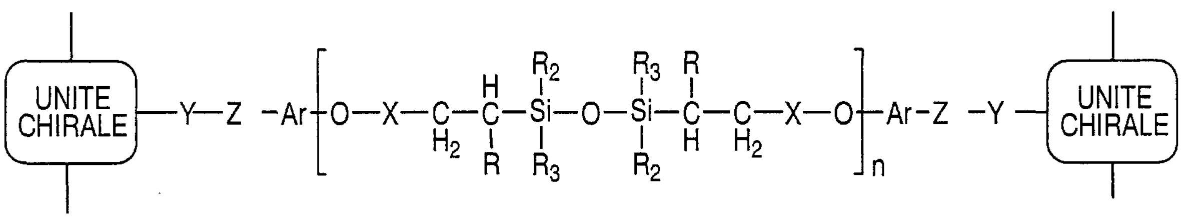

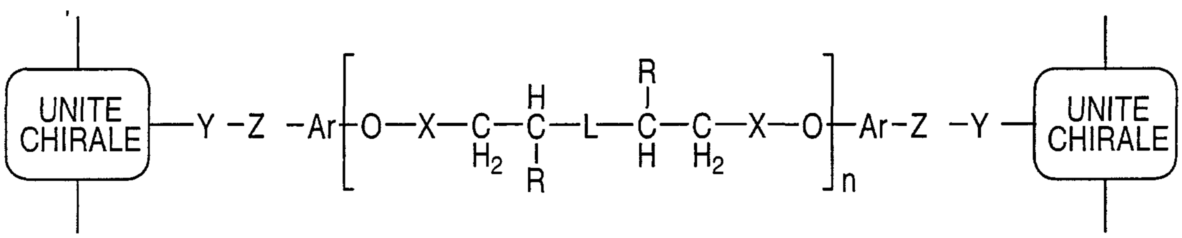

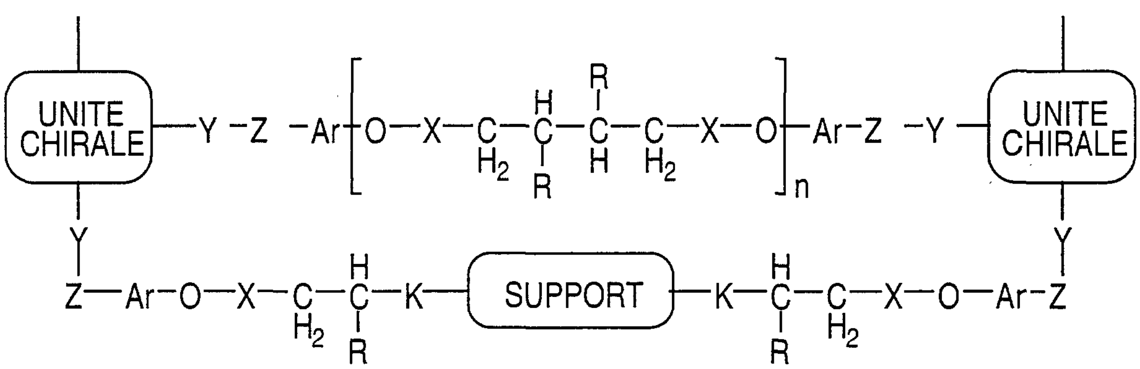

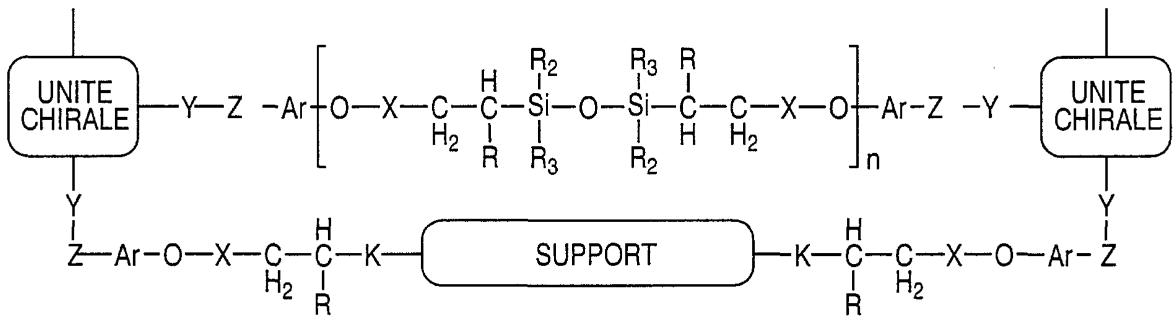

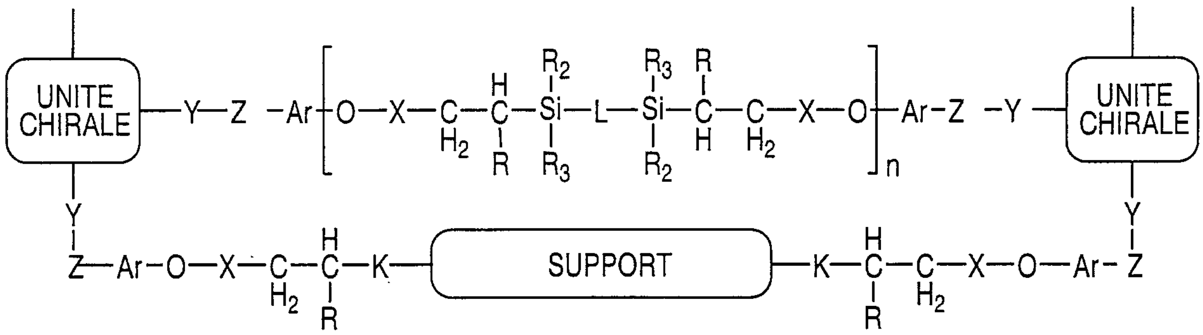

dans lesquelles UNITE CHIRALE, Z, Y, n, Ar, X, R, K et "SUPPORT" ont les mêmes significations que dans les revendications 1 et 2 et R2 et R3 sont des groupements alkoxy, hydroxy, trihalogénoalkyle, alkyle, linéaires ou ramifiés, ou aryle.

4. Support chiral selon l'une des revendications 1 à 3 **caractérisé en ce qu'**il est obtenu à partir d'un composé chiral par dépôt physique sur un support.

5. Support chiral selon l'une des revendications 1 à 3 **caractérisé en ce que** le composé chiral est lié chimiquement audit support par au moins une liaison chimique covalente.

6. Support chiral selon la revendication 5 **caractérisé en ce qu'**il est obtenu à partir d'un composé chiral et d'un support, ledit support étant préalablement dérivé par au moins un groupement choisi dans le groupe formé par les groupements alkoxy, halogéno ou aminosilanes, ledit groupement comportant également des fonctions -SH, -SiH ou -CH = CH-, par réalisation de liaisons chimiques covalentes par au moins une partie des motifs alcényles dudit composé chiral.

7. Support chiral selon l'une des revendications 1 à 6 **caractérisé en ce que** le support est choisi dans le groupe formé par les supports de type gel de silice native ou modifiée, les oxydes de zirconium, de magnésium, d'aluminium, de titane, les billes de verre, les carbones ou tout polymère organique.

8. Support chiral selon l'une des revendications 1 à 3 **caractérisé en ce qu'**il comprend des billes de composé chiral.

9. Support chiral selon la revendication 8 **caractérisé en ce qu'**il est obtenu à partir d'un composé chiral contenant des motifs alcényles par polymérisation, généralement par réticulation, d'au moins une partîe dedits motifs alcényles de façon à obtenir des billes de polymères.

10. Utilisation d'un support chiral selon l'une des revendications 1 à 9 dans la séparation de composés chiraux ou la préparation d'énantiomères par une opération choisie parmi la chromatographie liquide, la chromatographie gazeuse, la chromatographie supercritique, la chromatographie subcritique, la chromatographie de partage centrifuge, l'électrophorèse, l'éléctrochromatographie ou tout procédé de séparation membranaire et la synthèse asymétrique.

## Claims

1. A chiral support **characterized in that** it comprises at least one polymerised and cross-linked chiral compound, or an ester, amide, urea, carbamate, thioester or thiocarbamate derivative of such a chiral compound and **in that** it complies with general formula (I):

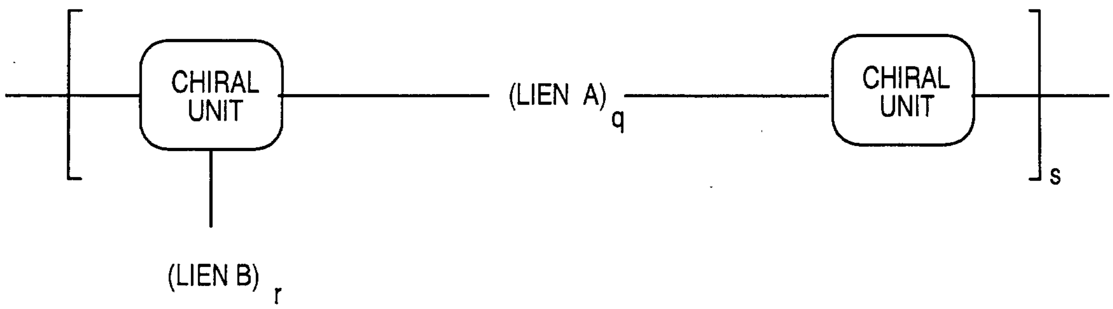

where:

- q is at least 1 and less than 20;
- s is at least 1 and less than 20000;
- if r = 0, the compound is a pure cross-linked chiral polymer, oligomer or monomer;
- if r ≥ 1, the compound is a chiral polymer, oligomer or monomer which is cross-linked in a three-dimensional network and bonded to a cross-linked support.

LINK A represents:

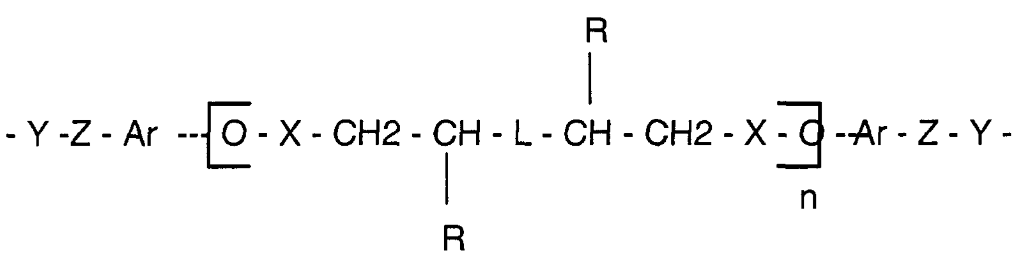

LINK B represents:

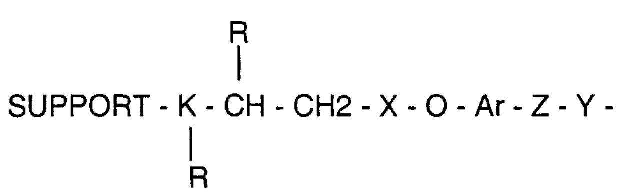

- "CHIRAL UNIT" represents a monomeric, oligomeric, cyclooligomeric or polymeric chiral compound and optionally comprises a primary or secondary amine function or a primary, secondary or tertiary hydroxyl function or a sulphhydryl function and in which all or a portion of these functions have optionally been modified to the

ester, amide, urea, carbamate, thioester or thiocarbamate;

- Z represents a $-CH_2-$ group or a -CO- group or a -NH-CO- group or a -NH-CS- group;
- Y represents a sulphur or oxygen atom or the amino group;
- n is in the range 1 to 20;
- Ar represents an aryl or polyaryl group;
- X represents an alkyl or aryl group;
- R represents an alkyl group or hydrogen;
- L represents a single bond or a bis-sulphhydryl or a silane or an ethylene group which may be substituted or a disiloxane;
- K represents a single bond or a siloxane or a silane;
- "SUPPORT" represents an organic or mineral support; functionalised by an alkene or a hydrogenosilane or a sulphhydryl.

**2.** Chiral support **characterized in that** its comprises at least one polymerised and cross-linked chiral compound, or at least one ester, amide, urea, carbamate, thioester or thiocarbamate derivative of such a chiral compound and **in that** it complies with the following general formula:

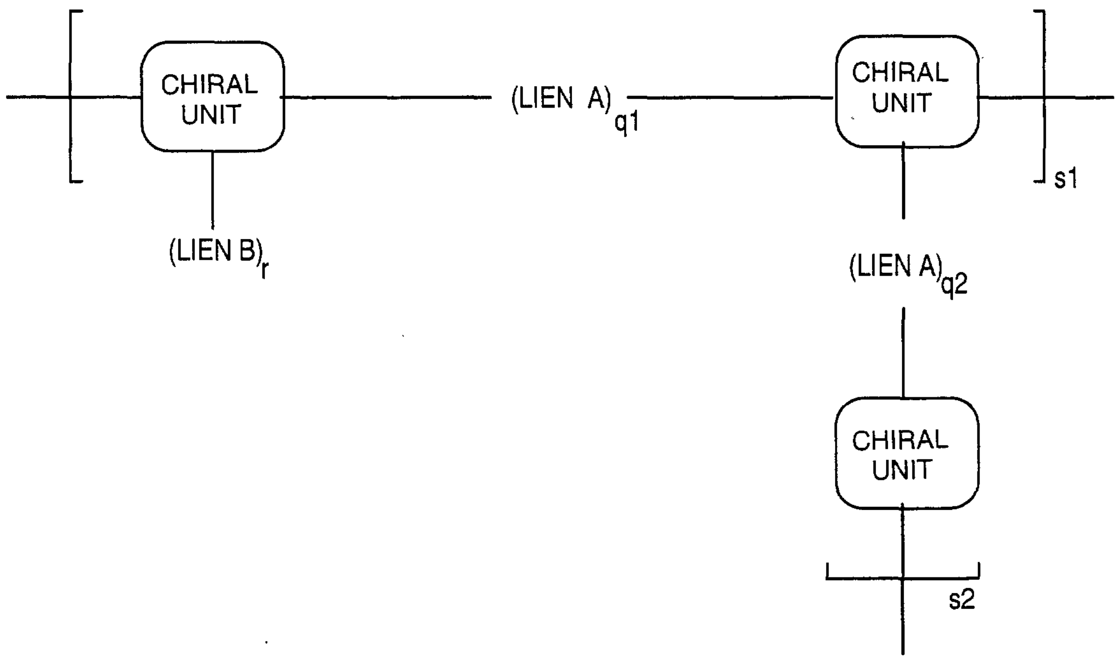

where:

- $q_1$ and $q_2$ are each at least 1 and less than 20;
- $s_1$ and $s_2$ are each at least 1 and less than 20000;
- if r = 0, the compound is a pure cross-linked chiral polymer, oligomer or monomer;
- if r ≥ 1, the compound is a chiral polymer, oligomer or monomer which is cross-linked in a three-dimensional network and bonded to a cross-linked support.

LINK A represents:

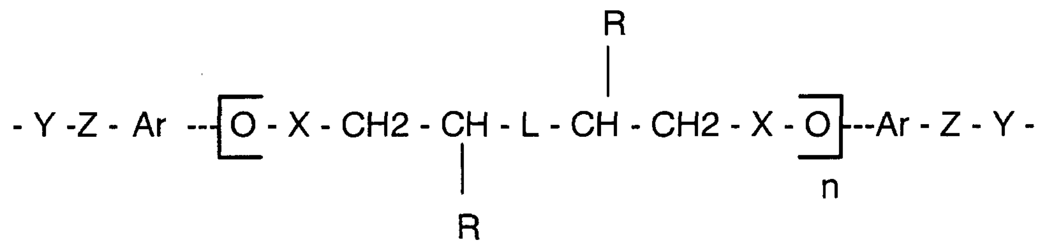

LINK B represents:

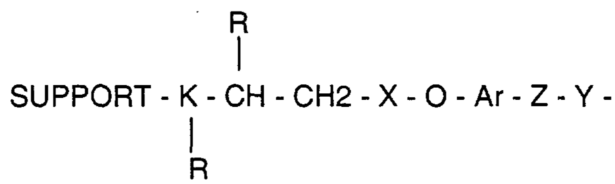

- "CHIRAL UNIT" represents a monomeric, oligomeric, cyclooligomeric or polymeric chiral compound and optionally comprises a primary or secondary amine function or a primary, secondary or tertiary hydroxyl function or a sulphhydryl function and in which all or a portion of these functions have optionally been modified to the ester, amide, urea, carbamate, thioester or thiocarbamate;
- Z represents a $-CH_2-$ group or a -CO- group or a -NH-CO- group or a -NH-CS- group;
- Y represents a sulphur or oxygen atom or the amino group;
- n is in the range 1 to 20;
- Ar represents an aryl or polyaryl group;
- X represents an alkyl or aryl group;
- R represents an alkyl group or hydrogen;
- L represents a single bond or a bis-sulphhydryl or a silane or an ethylene group which may be substituted or a disiloxane;
- K represents a single bond or a siloxane or a silane; and
- "SUPPORT" represents an organic or mineral support; functionalised by an alkene or a hydrogenosilane or a sulphhydryl.

**3.** A chiral support according to claim 1 or 2, **characterized in that** it comprises units having one of the following formulae:

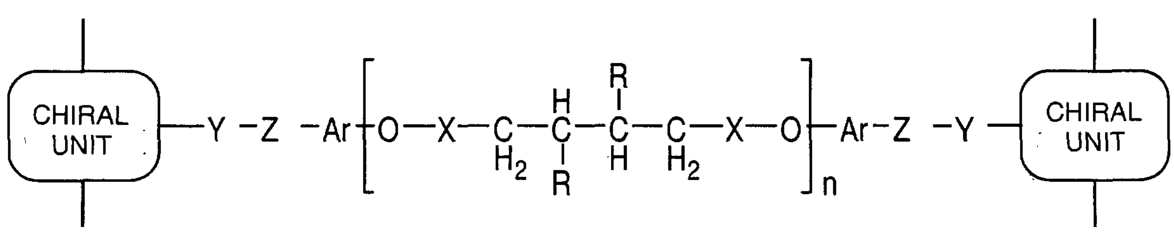

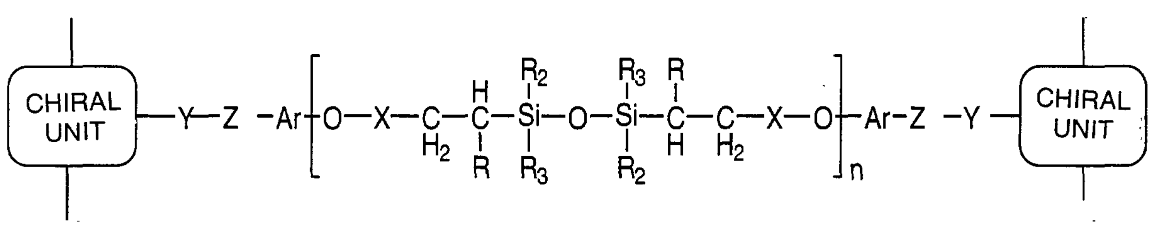

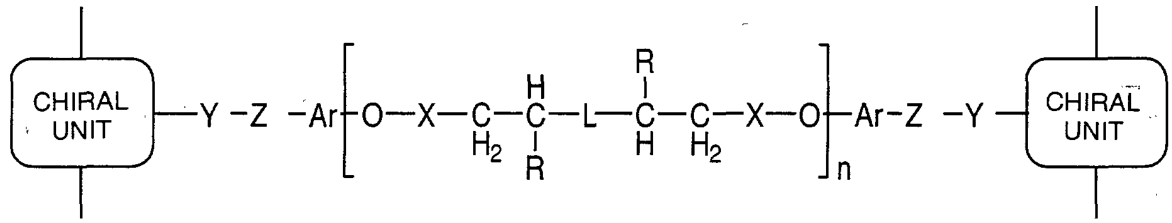

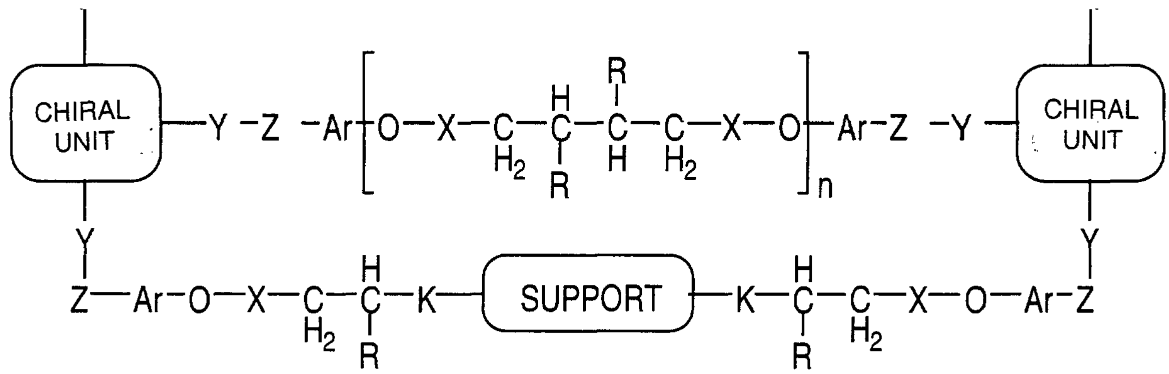

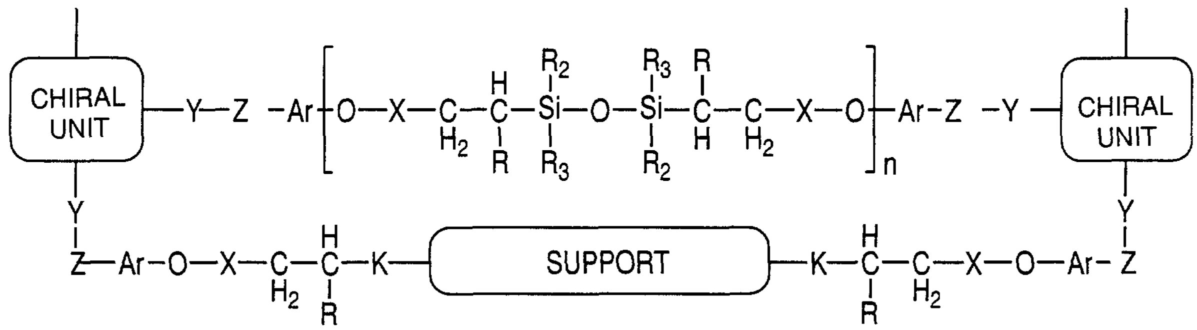

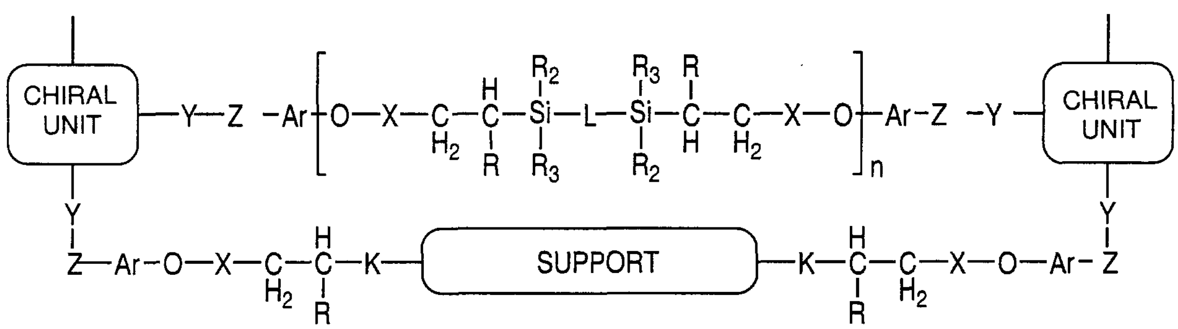

where CHIRAL UNIT, Z, Y, n, Ar, X, R, K and SUPPORT have the same meanings as in claims 1 and 2, and R2 and R3 are alkoxy, hydroxy, trihalogenoalkyl, linear or branched alkyl or aryl groups.

4. A chiral support according to any one of claims 1 to 3, **characterized in that** it is obtained by physical deposition on a support from a chiral compound.

5. A chiral support according to any one of claims 1 to 3, **characterized in that** the chiral compound is chemically bonded to said support by at least one covalent chemical bond.

6. A chiral support according to claim 5, **characterized in that** it is obtained from a chiral compound and a support,

said support having been reacted with at least one group selected from the group formed by alkoxy, halogeno or aminosilane groups to form a derivative, said group also comprising a function of the type -SH, -SiH or -CH=CH-, by forming covalent chemical bonds using at least part of the alkenyl moieties in said chiral compound.

**7.** A chiral support according to any one of claims 1 to 6, **characterized in that** the support is selected from the group formed by supports of the native or modified silica gel type, oxides of zirconium, magnesium, aluminium or titanium, glass beads, carbons or any organic polymer.

**8.** A chiral support according to any one of claims 1 to 3, **characterized in that** it comprises beads of a chiral compound.

**9.** A chiral support according to claim 8, **characterized in that** it is obtained from a chiral compound by polymerisation, generally by cross-linking, of at least a portion of said alkenyl moieties to obtain polymer beads.

**10.** The use of a chiral support according to any one of claims 1 to 9 for separating chiral compounds or for preparing enantiomers by an operation selected from: liquid chromatography, gas chromatography, supercritical chromatography, subcritical chromatography, centrifugal chromatography, electrophoresis, electrochromatography, or any membrane separation process, also asymmetrical synthesis.

**Patentansprüche**

**1.** Chiraler Träger, **dadurch gekennzeichnet, dass** er wenigstens eine chirale polymerisierte und vernetzte Verbindung oder wenigstens ein Ester-, Amid-, Harnstoff-, Carbamat-, Thioester- oder Thiocarbamatderivat einer solchen Verbindung umfaßt und dadurch, dass er der folgenden allgemeinen Formel (1) entspricht:

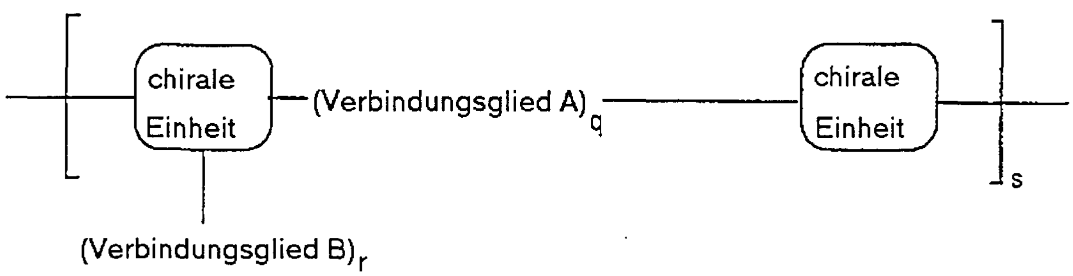

in welcher:

- q wenigstens gleich 1 und kleiner als 20 ist,
- s wenigstens gleich 1 und kleiner als 20.000 ist,
- wenn r = 0, die Verbindung ein chirales reines verzweigtes Polymer oder Oligomer oder Monomer ist,
- wenn r > 1, die Verbindung ein chirales verzweigtes Polymer oder Oligomer oder Monomer in einem dreidimensionalen und zu einem vernetzten Träger verbundenen Netz ist,
- VERBINDUNGSGLIED A stellt dar:

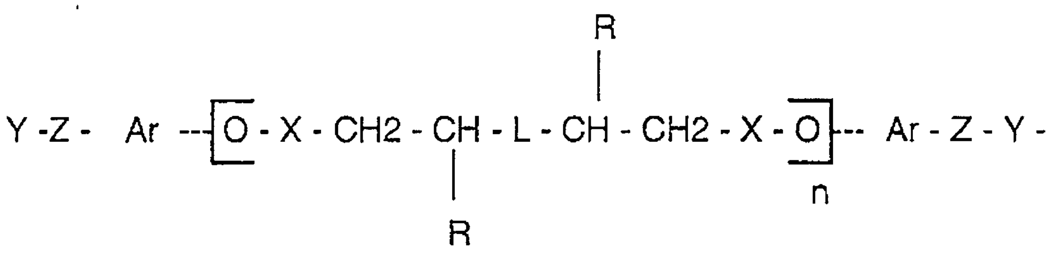

- VERBINDUNGSGLIED B stellt dar:

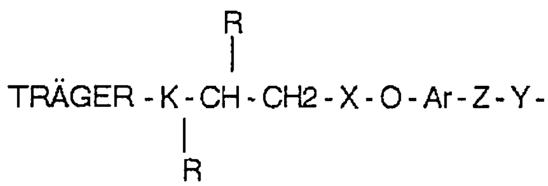

- CHIRALE EINHEIT stellt eine monomere, oligomere, zyclooligomere oder polymere chirale Verbindung dar, die gegebenenfalls eine primäre oder sekundäre Aminfunktion, eine primäre, sekundäre oder tertiäre Hydroxylfunktion oder eine Sulfohydrylfunktion aufweist und worin diese Funktionen vollständig oder teilweise gegebenenfalls in Ester-, Amid-, Harnstoff-, Karbamat-, Thioester- oder Thiocarbamatform modifiziert sind und wobei:

  - Z eine -CH2-, -CO-, -NH-CO- oder -NH-CS-Gruppe darstellt;
  - Y ein Schwefel- oder Sauerstoffatom oder die Aminogruppe darstellt;
  - n zwischen 1 und 20 liegt;
  - Ar eine Aryl- oder Polyarylgruppe darstellt;
  - X eine Alkyl- oder Arylgruppe darstellt;
  - R eine Alkylgruppe oder einen Wasserstoff darstellt;
  - L eine einfache Bindung oder eine Bis-Sulfohydrylbindung oder eine Silanbindung oder eine Ethylengruppe, die gegebenenfalls substituiert ist, oder ein Disiloxan darstellt;
  - K eine einfache Bindung oder ein Siloxan oder ein Silan darstellt;
  - TRÄGER stellt einen organischen oder mineralischen Träger dar, der durch ein Alken oder ein Hydrogensilan oder ein Sulfohydryl funktionalisiert ist.

**2.** Chiraler Träger, **dadurch gekennzeichnet, dass** er wenigstens eine chirale polymerisierte und vernetzte Verbindung oder wenigstens ein Ester-, Amid-, Harnstoff-, Carbamat-, Thioester-, oder Thiocarbamatderivat einer solchen chiralen Verbindung umfaßt und dadurch, dass er der folgenden allgemeinen Formel entspricht:

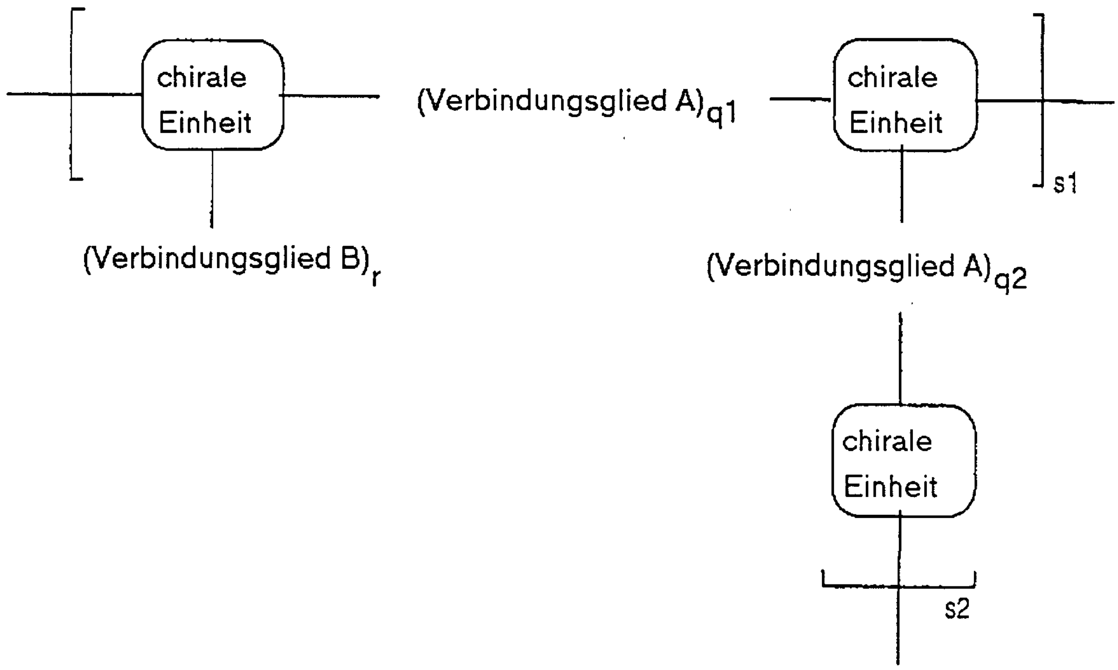


in der:

- jeder der q1 und q2 wenigstens gleich 1 und kleiner als 20 ist;
- jeder der s1 und s2 wenigstens gleich 1 und kleiner als 20.000 ist;
- wenn r = 0, die Verbindung ein reines chirales vernetztes Polymer oder Oligomer oder Monomer ist;
- wenn r ≥ 1, die Verbindung ein chirales vernetztes Polymer oder Oligomer oder Monomer in einem dreidimensionalen Netz und verbunden mit einem vernetzten Träger ist;
- VERBINDUNGSGLIED A stellt dar

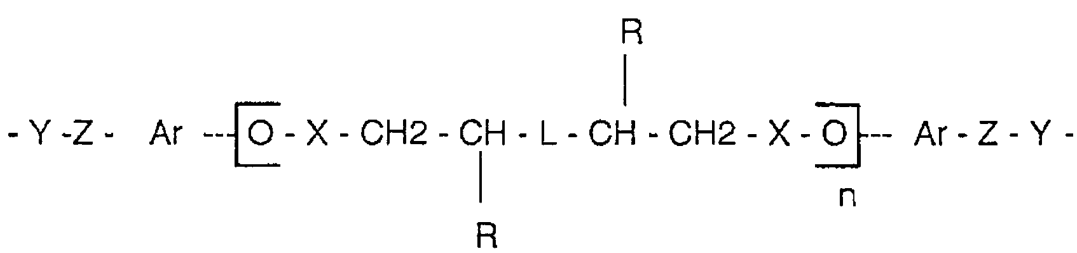

- VERBINDUNGSGLIED B stellt dar:

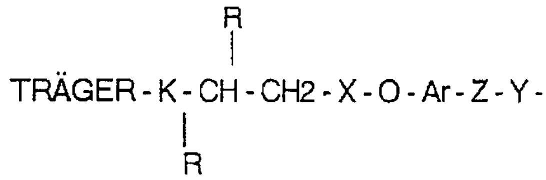

- CHIRALE EINHEIT stellt eine chirale monomerische, zyclooligomerische oder polymerische Verbindung dar und welche gegebenenfalls eine primäre oder sekundäre Aminfunktion, eine primäre, sekundäre oder tertiäre Hydroxylfunktion oder eine Sulfohydrylfunktion aufweist und worin diese Funktionen vollständig oder teilweise gegebenenfalls in Ester-, Amid-, Harnstoff-, Carbamat-, Thioester- oder Thiocarbamatform modifiziert sind;
- Z eine -CH2- oder eine -CO- oder eine -NH-CO- oder eine -NH-CS-Gruppe darstellt;
- Y ein Schwefel- oder Sauerstoffatom oder die Aminogruppe darstellt;
- n zwischen 1 und 20 liegt;
- Ar eine Aryl- oder Polyarylgruppe darstellt;
- X eine Alkyl- oder Arylgruppe darstellt;
- R eine Alkylgruppe oder einen Wasserstoff darstellt;
- L eine einfache Bindung oder eine Bis-Sulfohydrylbindung oder eine Silanbindung oder eine Ethylengruppe, die gegebenenfalls substituiert ist, oder ein Disiloxan darstellt;
- K eine einfache Bindung oder ein Siloxan oder ein Silan darstellt; und
- TRÄGER stellt einen organischen oder mineralischen Träger dar, der durch ein Alken oder ein Hydrogensilan oder ein Sulfohydryl funktionlisiert ist.

**3.** Chiraler Träger nach einem der Ansprüche 1 oder 2, **dadurch gekennzeichnet, dass** er Motive umfaßt, die einer der folgenden Formeln entsprechen:

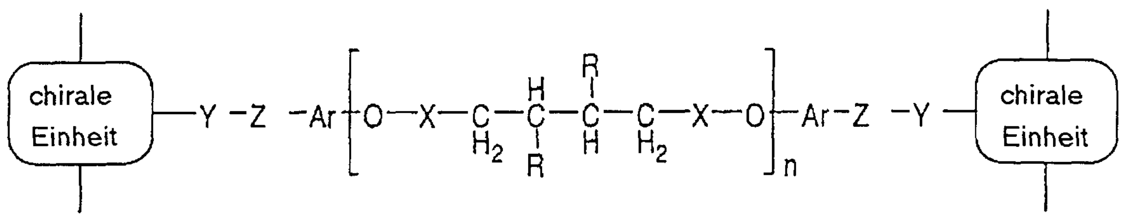

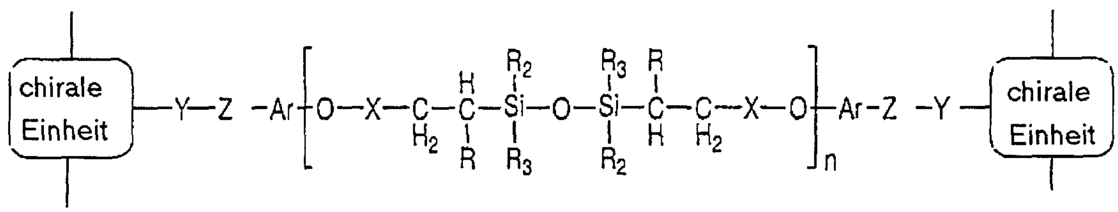

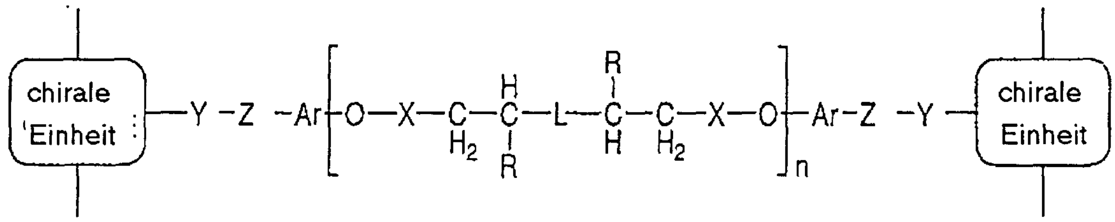

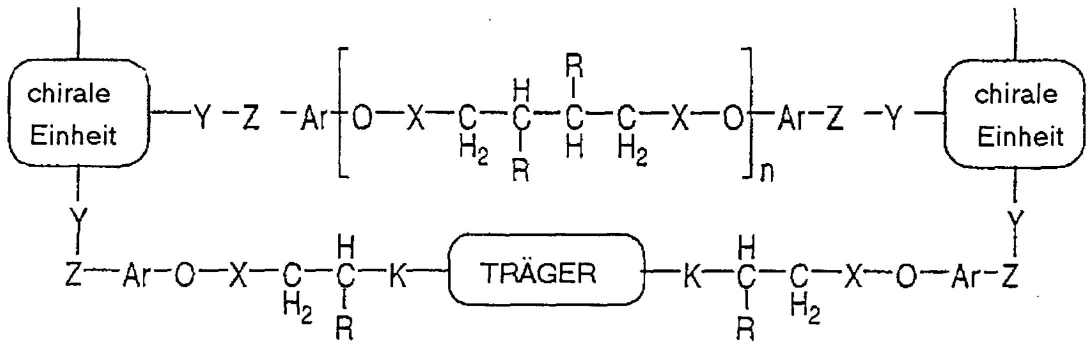

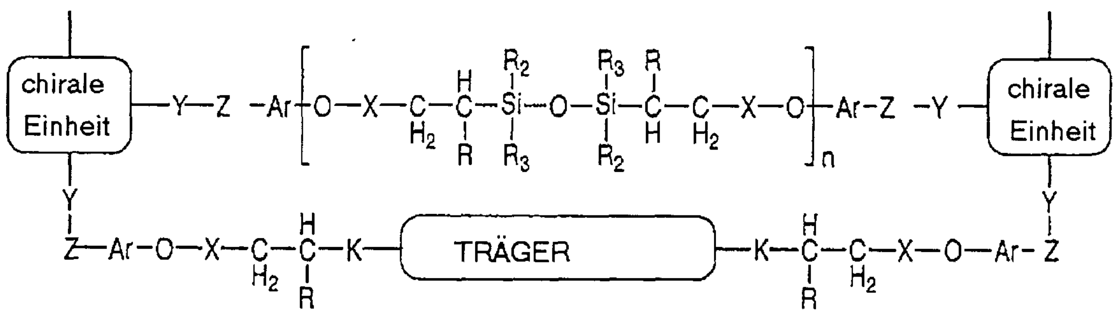

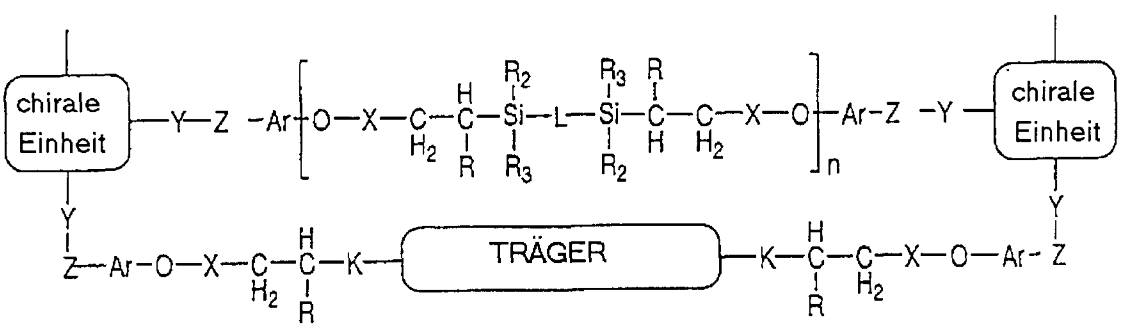

in denen CHIRALE EINHEIT Z, Y, n, Ar, X, R, K und "TRÄGER" dieselben Bedeutungen haben, wie in den Ansprüchen 1 und 2 und R2 und R3 Alkoxy-, Hydroxy-, Trihalogenalkyl-, Alkylengruppen sind, die linear oder verzweigt sind, oder Arylgruppen sind.

4. Chiraler Träger nach einem der Ansprüche 1 bis 3, **dadurch gekennzeichnet, dass** er ausgehend von einer chiralen Verbindung durch physikalische Abscheidung auf einen Träger erhalten wird.

5. Chiraler Träger nach einem der Ansprüche 1 bis 3, **dadurch gekennzeichnet, dass** die chirale Verbindung chemisch mit dem Träger durch wenigstens eine kovalente chemische Bindung verbunden ist.

**6.** Chiraler Träger nach Anspruch 5, **dadurch gekennzeichnet, dass** er ausgehend von einer chiralen Verbindung und einem Träger erhalten wird, wobei der Träger vorher durch wenigstens eine Gruppe derivatisiert ist, die gewählt ist aus der Gruppe, die gebildet wird durch die Alkoxy-, Halogen-, oder Aminosilangruppen, wobei diese Gruppe gleichermaßen SH-, SiH- oder -CH=CH-Gruppen umfaßt, und zwar durch Verwirklichung von kovalenten chemischen Verbindungen durch wenigstens einen Teil der azetylenischen Motive der chiralen chemischen Bindungen.

**7.** Chiraler Träger nach einem der Ansprüche 1 bis 6, **dadurch gekennzeichnet, dass** der Träger aus der Gruppe gewählt ist, die gebildet wird durch die Träger vom Typ natives oder modifiziertes Siliziumoxidgel, die Oxide von Zirconium, von Magnesium, von Aluminium, von Titan, die Glaskugeln, die Kohlen oder jedes organische Polymer.

**8.** Chiraler Träger nach einem der Ansprüche 1 bis 3, **dadurch gekennzeichnet, dass** er Kugeln einer chiralen Verbindung umfaßt.

**9.** Chiraler Träger nach Anspruch 8, **dadurch gekennzeichnet, dass** er ausgehend von einer Alkenylmotive enthaltenden chiralen Verbindung durch Polymerisation, im allgemeinen durch Vernetzung wenigstens eines Teils dieser alkylenischen Motive derart erhalten wird, dass Polymerkugeln erhalten werden.

**10.** Verwendung eines chiralen Trägers nach einem der Ansprüche 1 bis 9, bei der Trennung von chiralen Verbindungen oder der Herstellung von Enantiomeren durch einen Vorgang erfolgt, der gewählt ist unter der Flüssigchromatographie, der Gaschromatographie, der superkritischen Chromatographie, der subkritischen Chromatographie, der Chromatographie mit Zentrifugentrennung, der Elektrophorese, der Elektrochromatographie oder jedem Membrantrennverfahren und der asymmetrischen Synthese.